# EUROPEAN PATENT SPECIFICATION

(11) **EP 4 432 621 B1**
(45) Date of publication and mention of the grant of the patent: **30.09.2026**
(21) Application number: 21967629.3
(22) Date of filing: 15.12.2021
(51) Int. Cl.: H04L 69/14, H04L 69/321, H04L 69/324, H04L 69/326, H04L 45/24, H04L 47/00, H04L 45/50, H04L 45/74, H04L 47/28, H04W 40/00, H04L 69/16

(54) **TRANSMISSION AND RECEPTION OF ENCAPSULATED DATA**
ÜBERTRAGUNG UND EMPFANG VON EINGEKAPSELTEN DATEN
TRANSMISSION ET RÉCEPTION DE DONNÉES ENCAPSULÉES

(43) Date of publication of application: 18.09.2024
(73) Proprietor: Huawei Technologies Co., Ltd., Shenzhen, Guangdong 518129 (CN)
(72) Inventor: ZHANG, Haibo, Shenzhen, Guangdong 518129 (CN); XU, Cong, Shenzhen, Guangdong 518129 (CN); GUO, Xiaodong, Shenzhen, Guangdong 518129 (CN); XIAO, Yuanhui, Shenzhen, Guangdong 518129 (CN)
(74) Representative: Thun, Clemens
(86) International application number: PCT/CN2021/138412
(87) International publication number: WO 2023/108492

(56) References cited:
- CN-A- 102 665 257
- CN-A- 108 833 274
- CN-A- 110 087 335
- CN-A- 113 381 939
- US-A1- 2014 029 527
- US-A1- 2016 072 641
- AUST S ET AL: "ENHANCED LINK-STATUS DETECTION FOR HIGH SPEED LINK AGGREGATION IN COGNITIVE RADIO NETWORKS", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E91A, no. 7, 1 July 2008 (2008-07-01), pages 1609 - 1615, XP001515478, ISSN: 0916-8508, DOI: 10.1093/IETFEC/E91-A.7.1609

## Description

### TECHNICAL FIELD

Embodiments of this application relate to the communication field, and more specifically, to a communication method and apparatus.

### BACKGROUND

When a terminal device supports communication using a plurality of links (for example, a wireless local area network (Wi-Fi) link and a long term evolution (LTE) cellular link), a higher bandwidth is obtained by simultaneously using bandwidths of the plurality of links (for example, bundling the plurality of links).

In a current multilink bundling manner, an application (APP) needs to be modified to invoke a transmission protocol (for example, the transmission control protocol (TCP)) that supports link bundling. Therefore, how to implement multilink bundling without modifying an app becomes an urgent problem to be resolved.

Document US 2014/029527 A1 discloses a base station apparatus and a wireless terminal apparatus.

Document US 2016/072641 A1 discloses a data transmission method, an apparatus, and a computer storage medium.

### SUMMARY

Objects of the application are methods, an apparatus, a computer program product and a chip according to the independent claims. Preferred embodiments are covered by the appended dependent claims. To-be-sent data of an app is encapsulated based on a network adapter address, so that the app is unaware of multilink bundling, thereby implementing multilink bundling while simplifying an operation of the app.

According to a first aspect, a communication method is provided. The method may be performed by a data sending device, or may be performed by a component (for example, a chip or a circuit) of a data sending device. This is not limited. For ease of description, the following uses an example in which the method is performed by a data sending device for description.

The communication method includes: The data sending device obtains first data, where the first data includes to-be-sent data of a first application installed on the data sending device, and a destination address of the first data is an address of a data receiving device; the data sending device determines, based on the address of the data receiving device, a first network adapter address corresponding to the address of the data receiving device, where the first network adapter address is an address or addresses of one or more network adapters of the data receiving device; the data sending device encapsulates the first data based on the first network adapter address to obtain encapsulated first data; and the data sending device sends the encapsulated first data to the data receiving device through a plurality of links, where a destination address of each of the plurality of links is one address in the first network adapter address, a source address of each of the plurality of links is one address in a second network adapter address, and the second network adapter address is an address or addresses of one or more network adapters of the data sending device, where the first data includes a plurality of data packets, and the includes first data includes a plurality of encapsulated data packets, the sending, by the data sending device, the encapsulated first data to the data receiving device through a plurality of links includes: sending, by the data sending device, the plurality of encapsulated data packets to the data receiving device through a first link, and the method further includes: receiving, by the data sending device, first indication information from the data receiving device, where the first indication information indicates a latency difference between two encapsulated data packets transmitted through the first link, and the latency difference is greater than a preset threshold, and adjusting, by the data sending device based on the first indication information, a weight of an encapsulated data packet transmitted on the first link, where the first link is any one of the plurality of links.

Based on the foregoing technical solution, the data sending device obtains the to-be-sent first data of the locally installed app, and encapsulates the first data based on the network adapter address of the data receiving device. The encapsulated data may be sent in a multilink bundling manner. However, in this application, because the to-be-sent data sent by the app is encapsulated based on the network adapter address and then sent through the plurality of links, the app is unaware of multilink bundling, thereby implementing multilink bundling while simplifying an operation of the app.

For example, that the data sending device encapsulates the first data based on the first network adapter address to obtain the encapsulated first data may be understood as: The data sending device encapsulates a part of the first data based on a network adapter address corresponding to a specific link, and sends the part of encapsulated data through the link.

With reference to the first aspect, in some implementations of the first aspect, the method further includes: The data sending device sends a probe packet to the data receiving device, where the probe packet is used to probe whether the data receiving device supports network adapter address-based data decapsulation; and the data sending device receives a response message from the data receiving device, where the response message indicates that the data receiving device supports network adapter address-based data decapsulation.

Based on the foregoing technical solution, the data sending device can learn, by sending the probe packet, whether the data receiving device supports network adapter address-based data decapsulation.

With reference to the first aspect, in some implementations of the first aspect, the response message includes the first network adapter address.

When the data receiving device supports network adapter address-based data decapsulation, the data sending device receives the response message from the data receiving device, where the response message includes the first network adapter address, to ensure that the encapsulated first data sent by the data sending device can be decapsulated by the data receiving device, and improve data sending accuracy.

With reference to the first aspect, in some implementations of the first aspect, the method further includes: The data sending device establishes the plurality of links based on the first network adapter address and the second network adapter address.

In all implementations, the first data includes a plurality of data packets, and the encapsulated first data includes a plurality of encapsulated data packets. That the data sending device sends the encapsulated first data to the data receiving device through the plurality of links includes: The data sending device sends the plurality of encapsulated data packets to the data receiving device through a first link. The method further includes: The data sending device receives first indication information from the data receiving device, where the first indication information indicates a latency difference between two encapsulated data packets transmitted through the first link, and the latency difference is greater than a preset threshold; and the data sending device adjusts, based on the first indication information, a weight of an encapsulated data packet transmitted on the first link, where the first link is any one of the plurality of links.

For example, the preset threshold may be a threshold used to determine a steady state of a network. For example, the preset threshold is N*round-trip time (RTT), where N is a positive integer.

Based on the foregoing technical solution, the data sending device may dynamically adjust, based on a one-way latency variation value of a link, weights of the encapsulated data packets transmitted on the plurality of links, so that balance is maintained between the plurality of links, resources of the plurality of links are fully utilized, and link performance is optimized. A weight of an encapsulated data packet transmitted on a link may be understood as a weight (or a proportion) of the encapsulated data packet transmitted on the link in the encapsulated data packets.

With reference to the first aspect, in some implementations of the first aspect, the two data packets include: two data packets with consecutive sequence numbers that are transmitted through the first link; or two data packets with inconsecutive sequence numbers that are transmitted through the first link.

The two data packets transmitted on the first link may be two data packets with consecutive sequence numbers, or may be two data packets with inconsecutive sequence numbers. This improves flexibility of the solution.

With reference to the first aspect, in some implementations of the first aspect, an adjusted weight of the encapsulated data packet transmitted on the first link is less than the unadjusted weight of the encapsulated data packet transmitted on the first link.

In all implementations, the weight of the encapsulated data packet transmitted on the first link and the latency difference satisfy the following formula: M1=M/T, where M1 represents the adjusted weight of the encapsulated data packet transmitted on the first link, M represents the unadjusted weight of the encapsulated data packet transmitted on the first link, and T represents the latency difference.

With reference to the first aspect, in some implementations of the first aspect, the method further includes: The data sending device receives second indication information from the data receiving device, where the second indication information indicates a first packet loss rate of a first link; and the data sending device adjusts, based on the second indication information, a weight of an encapsulated data packet transmitted on the first link, where the first link is any one of the plurality of links.

Based on the foregoing technical solution, the data sending device may dynamically adjust, based on a packet loss rate of a link, weights of the encapsulated data packets transmitted on the plurality of links, so that balance is maintained between the plurality of links, resources of the plurality of links are fully utilized, and link performance is optimized.

With reference to the first aspect, in some implementations of the first aspect, the first packet loss rate is greater than a second packet loss rate, an adjusted weight of the encapsulated data packet transmitted on the first link is less than the unadjusted weight of the encapsulated data packet transmitted on the first link, and the second packet loss rate is a packet loss rate that is of a link other than the first link and that is locally stored in the data sending device.

With reference to the first aspect, in some implementations of the first aspect, that the data sending device sends the encapsulated first data to the data receiving device through the plurality of links includes: A distribution module corresponding to a first wireless interface of the data sending device segments the first data into a first data packet and a second data packet, where the second data packet is distributed to a second wireless interface of the data sending device; the first wireless interface of the data sending device sends an encapsulated first data packet to the data receiving device through the first link; and the second wireless interface of the data sending device sends an encapsulated second data packet to the data receiving device through a second link.

Based on the foregoing technical solution, multi-band bandwidth bundling can be implemented, a bandwidth available to an application can be expanded, and data transmission reliability can be improved.

According to a second aspect, a communication method is provided. The method may be performed by a data receiving device, or may be performed by a component (for example, a chip or a circuit) of a data receiving device. This is not limited. For ease of description, the following uses an example in which the method is performed by a data receiving device for description.

The communication method includes: The data receiving device receives encapsulated first data from a data sending device through a plurality of links; and the data receiving device decapsulates the encapsulated first data based on a first network adapter address to obtain first data, where the first data includes to-be-sent data of a first application installed on the data sending device, a destination address of the first data is an address of the data receiving device, the address of the data receiving device corresponds to the first network adapter address, the first network adapter address is an address or addresses of one or more network adapters of the data receiving device, and the encapsulated first data is data obtained by encapsulating the first data based on the first network adapter address.

Based on the foregoing technical solution, the data sending device obtains the to-be-sent first data of the locally installed app, and encapsulates the first data based on the network adapter address of the data receiving device. The encapsulated data may be sent in a multilink bundling manner. However, in this application, because the to-be-sent data sent by the app is encapsulated based on the network adapter address and then sent through the plurality of links, the app is unaware of multilink bundling, thereby implementing multilink bundling while simplifying an operation of the app.

With reference to the second aspect, in some implementations of the second aspect, the method further includes: The data receiving device receives a probe packet from the data sending device, where the probe packet is used to probe whether the data receiving device supports network adapter address-based data decapsulation; and when the data receiving device supports network adapter address-based data decapsulation, the data receiving device sends a response message to the data sending device, where the response message indicates that the data receiving device supports network adapter address-based data decapsulation.

Based on the foregoing technical solution, the data sending device can learn, by sending the probe packet, whether the data receiving device supports network adapter address-based data decapsulation.

With reference to the second aspect, in some implementations of the second aspect, the response message includes the first network adapter address.

When the data receiving device supports network adapter address-based data decapsulation, the data sending device receives the response message from the data receiving device, where the response message includes the first network adapter address, to ensure that the encapsulated first data sent by the data sending device can be decapsulated by the data receiving device, and improve data sending accuracy.

With reference to the second aspect, in some implementations of the second aspect, the first data includes a plurality of data packets, and the encapsulated first data includes a plurality of encapsulated data packets. That the data receiving device receives the encapsulated first data from the data sending device through the plurality of links includes: The data receiving device receives the plurality of encapsulated data packets from the data sending device through a first link.

The method includes: The data receiving device sends first indication information to the data sending device, where the first indication information indicates a latency difference between two encapsulated data packets transmitted through the first link, the latency difference is used to adjust a weight of an encapsulated data packet transmitted on the first link, the latency difference is greater than a preset threshold, and the first link is any one of the plurality of links. Based on the foregoing technical solution, a one-way latency variation value of a link may be used to dynamically adjust weights of the encapsulated data packets transmitted on the plurality of links, so that balance is maintained between the plurality of links, resources of the plurality of links are fully utilized, and link performance is optimized.

With reference to the second aspect, in some implementations of the second aspect, an adjusted weight of the encapsulated data packet transmitted on the first link is less than the unadjusted weight of the encapsulated data packet transmitted on the first link.

With reference to the second aspect, in some implementations of the second aspect, the method further includes: The data receiving device sends second indication information to the data sending device, where the second indication information indicates a first packet loss rate of a first link, the first packet loss rate is used to adjust a weight of an encapsulated data packet transmitted on the first link, and the first link is any one of the plurality of links.

Based on the foregoing technical solution, a packet loss rate of a link may be used to dynamically adjust weights of the encapsulated data packets transmitted on the plurality of links, so that balance is maintained between the plurality of links, resources of the plurality of links are fully utilized, and link performance is optimized.

With reference to the second aspect, in some implementations of the second aspect, the first packet loss rate is greater than a second packet loss rate, and an adjusted weight of the encapsulated data packet transmitted on the first link is less than the unadjusted weight of the encapsulated data packet transmitted on the first link.

The second packet loss rate is a packet loss rate that is of a link other than the first link and that is locally stored in the data sending device.

According to a third aspect, a communication apparatus is provided, including units configured to perform the method shown in the first aspect. The communication apparatus may be a data sending device, or may be a chip or a circuit disposed in a data sending device. This is not limited in this application.

The communication apparatus includes:
a processing unit, configured to obtain first data, where the first data includes to-be-sent data of a first application installed on the data sending device, and a destination address of the first data is an address of a data receiving device, where
the processing unit is further configured to determine, based on the address of the data receiving device, a first network adapter address corresponding to the address of the data receiving device, where the first network adapter address is an address or addresses of one or more network adapters of the data receiving device; and
the processing unit is further configured to encapsulate the first data based on the first network adapter address to obtain encapsulated first data; and
a sending unit, configured to send the encapsulated first data to the data receiving device through a plurality of links.

A destination address of each of the plurality of links is one address in the first network adapter address, a source address of each of the plurality of links is one address in a second network adapter address, and the second network adapter address is an address or addresses of one or more network adapters of the data sending device.

With reference to the third aspect, in some implementations of the third aspect, the sending unit is further configured to send a probe packet to the data receiving device, where the probe packet is used to probe whether the data receiving device supports network adapter address-based data decapsulation.

The apparatus further includes:
a receiving unit, configured to receive a response message from the data receiving device, where the response message indicates that the data receiving device supports network adapter address-based data decapsulation.

With reference to the third aspect, in some implementations of the third aspect, the response message includes the first network adapter address. With reference to the third aspect, in some implementations of the third aspect, the processing unit is further configured to establish the plurality of links based on the first network adapter address and the second network adapter address.

With reference to the third aspect, in some implementations of the third aspect, the first data includes a plurality of data packets, and the encapsulated first data includes a plurality of encapsulated data packets.

That the sending unit sends the encapsulated first data to the data receiving device through the plurality of links includes: The sending unit sends the plurality of encapsulated data packets to the data receiving device through a first link.

The receiving unit is configured to receive first indication information from the data receiving device, where the first indication information indicates a latency difference between two encapsulated data packets transmitted through the first link, and the latency difference is greater than a preset threshold.

The processing unit is further configured to adjust, based on the first indication information, a weight of an encapsulated data packet transmitted on the first link.

The first link is any one of the plurality of links.

With reference to the third aspect, in some implementations of the third aspect, an adjusted weight of the encapsulated data packet transmitted on the first link is less than the unadjusted weight of the encapsulated data packet transmitted on the first link.

In all implementations, that the processing unit adjusts, based on the first indication information, the weight of the encapsulated data packet transmitted on the first link includes:

The processing unit adjusts, based on the latency difference, the weight of the encapsulated data packet transmitted on the first link, where the weight of the encapsulated data packet transmitted on the first link and the latency difference satisfy the following formula: M1=M/T, where M1 represents the adjusted weight of the encapsulated data packet transmitted on the first link, M represents the unadjusted weight of the encapsulated data packet transmitted on the first link, and T represents the latency difference.

With reference to the third aspect, in some implementations of the third aspect, the receiving unit is further configured to receive second indication information from the data receiving device, where the second indication information indicates a first packet loss rate of a first link.

The processing unit is further configured to adjust, based on the second indication information, a weight of an encapsulated data packet transmitted on the first link.

The first link is any one of the plurality of links.

With reference to the third aspect, in some implementations of the third aspect, the first packet loss rate is greater than a second packet loss rate, an adjusted weight of the encapsulated data packet transmitted on the first link is less than the unadjusted weight of the encapsulated data packet transmitted on the first link, and the second packet loss rate is a packet loss rate that is of a link other than the first link and that is locally stored in the data sending device.

With reference to the third aspect, in some implementations of the third aspect, the processing unit is further configured to: segment the first data into a first data packet and a second data packet, and distribute the second data packet to a second wireless interface of the data sending device.

That the sending unit sends the encapsulated first data to the data receiving device through the plurality of links includes:
a first sending unit corresponding to a first wireless interface sends an encapsulated first data packet to the data receiving device through the first link; and
a second sending unit corresponding to the second wireless interface sends an encapsulated second data packet to the data receiving device through a second link.

For explanations of related content and beneficial effects of the communication apparatus provided in the third aspect, refer to the method shown in the first aspect. Details are not described herein again.

According to a fourth aspect, a communication apparatus is provided, including units configured to perform the method shown in the second aspect. The communication apparatus may be a data receiving device, or may be a chip or a circuit disposed in a data receiving device. This is not limited in this application.

The communication apparatus includes:
a receiving unit, configured to receive encapsulated first data from a data sending device through a plurality of links, and
a processing unit, configured to decapsulate the encapsulated first data based on a first network adapter address to obtain first data.

The first data includes to-be-sent data of a first application installed on the data sending device, a destination address of the first data is an address of the data receiving device, the address of the data receiving device corresponds to the first network adapter address, the first network adapter address is an address or addresses of one or more network adapters of the data receiving device, and the encapsulated first data is data obtained by encapsulating the first data based on the first network adapter address.

With reference to the fourth aspect, in some implementations of the fourth aspect, the receiving unit is further configured to receive a probe packet from the data sending device, where the probe packet is used to probe whether the data receiving device supports network adapter address-based data decapsulation.

The apparatus further includes:
a sending unit, configured to send a response message to the data sending device, where the response message indicates that the data receiving device supports network adapter address-based data decapsulation.

With reference to the fourth aspect, in some implementations of the fourth aspect, the response message includes the first network adapter address. With reference to the fourth aspect, in some implementations of the fourth aspect, the first data includes a plurality of data packets, and the encapsulated first data includes a plurality of encapsulated data packets. That the receiving unit receives the encapsulated first data from the data sending device through the plurality of links includes: The receiving unit receives the plurality of encapsulated data packets from the data sending device through a first link.

The apparatus includes:
the sending unit, configured to send first indication information to the data sending device, where the first indication information indicates a latency difference between two encapsulated data packets transmitted through the first link, the latency difference is used to adjust weights of the encapsulated data packets transmitted on the plurality of links, the latency difference is greater than a preset threshold, and the first link is any one of the plurality of links.

With reference to the fourth aspect, in some implementations of the fourth aspect, an adjusted weight of the encapsulated data packet transmitted on the first link is less than the unadjusted weight of the encapsulated data packet transmitted on the first link.

With reference to the fourth aspect, in some implementations of the fourth aspect, the apparatus further includes:
the sending unit, configured to send second indication information to the data sending device, where the second indication information indicates a first packet loss rate of a first link, the first packet loss rate is used to adjust a weight of an encapsulated data packet transmitted on the first link, and the first link is any one of the plurality of links.

With reference to the fourth aspect, in some implementations of the fourth aspect, the first packet loss rate is greater than a second packet loss rate, and an adjusted weight of the encapsulated data packet transmitted on the first link is less than the unadjusted weight of the encapsulated data packet transmitted on the first link.

The second packet loss rate is a packet loss rate that is of a link other than the first link and that is locally stored in the data sending device.

For explanations of related content and beneficial effects of the communication apparatus provided in the fourth aspect, refer to the method shown in the second aspect. Details are not described herein again.

According to a fifth aspect, a communication apparatus is provided. The communication apparatus includes a processor, configured to implement a function of the data sending device in the method described in the first aspect.

Optionally, the communication apparatus may further include a memory, the memory is coupled to the processor, and the processor is configured to implement the function of the data sending device in the method described in the first aspect.

In a possible implementation, the memory is configured to store program instructions and data. The memory is coupled to the processor. The processor may invoke and execute the program instructions stored in the memory, to implement the function of the data sending device in the method described in the first aspect.

Optionally, the communication apparatus may further include a communication interface. The communication interface is used by the communication apparatus to communicate with another device. When the communication apparatus is a data sending device, the communication interface may be a transceiver, an input/output interface, a circuit, or the like.

In a possible design, the communication apparatus includes a processor and a communication interface.

The processor is configured to run a computer program, to enable the communication apparatus to implement any method described in the first aspect.

The processor communicates with the outside through the communication interface.

It may be understood that the outside may be an object other than the processor or an object other than the apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a sixth aspect, a communication apparatus is provided. The communication apparatus includes a processor, configured to implement a function of the data receiving device in the method described in the second aspect.

Optionally, the communication apparatus may further include a memory, the memory is coupled to the processor, and the processor is configured to implement the function of the data receiving device in the method described in the second aspect.

In a possible implementation, the memory is configured to store program instructions and data. The memory is coupled to the processor. The processor may invoke and execute the program instructions stored in the memory, to implement the function of the data receiving device in the method described in the second aspect.

Optionally, the communication apparatus may further include a communication interface. The communication interface is used by the communication apparatus to communicate with another device. When the communication apparatus is a data receiving device, the communication interface may be a transceiver, an input/output interface, a circuit, or the like.

In a possible design, the communication apparatus includes a processor and a communication interface.

The processor is configured to run a computer program, to enable the communication apparatus to implement any method described in the second aspect.

The processor communicates with the outside through the communication interface.

It may be understood that the outside may be an object other than the processor or an object other than the apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a seventh aspect, this application provides a computer-readable storage medium. The computer-readable storage medium stores instructions, and when the instructions are run on a computer, the computer is enabled to perform the methods in the foregoing aspects.

According to an eighth aspect, this application provides a computer program product including instructions. When the computer program product runs on a computer, the computer is enabled to perform the methods in the foregoing aspects.

According to a ninth aspect, a communication system is provided, including the communication apparatus shown in the third aspect and the communication apparatus shown in the fourth aspect.

According to a tenth aspect, a chip apparatus is provided, including a processing circuit. The processing circuit is configured to invoke a program from a memory and run the program, to enable a communication device on which the chip apparatus is installed to perform the method according to any one of the possible implementations of the first aspect and the second aspect.

### BRIEF DESCRIPTION OF DRAWINGS

FIG. 1 is a diagram of a scenario to which an embodiment of this application is applicable;
FIG. 2 is a diagram of a multilink bundling scenario in a wide area network according to this application;
FIG. 3 is a diagram of a multilink bundling scenario in a local area network according to this application;
FIG. 4 is a schematic flowchart of a communication method according to this application;
FIG. 5 is a diagram of multilink bundling data transmission in a wide area network according to this application;
FIG. 6A and FIG. 6B are a diagram of multilink bundling data transmission in a local area network according to this application;
FIG. 7 is a schematic flowchart of another communication method according to an embodiment of this application;
FIG. 8 is a schematic flowchart of another communication method according to an embodiment of this application;
FIG. 9 is a block diagram of an apparatus 900 according to an embodiment of this application; and
FIG. 10 is a block diagram of an apparatus 1000 according to an embodiment of this application.

### DESCRIPTION OF EMBODIMENTS

The following describes the technical solutions in embodiments of this application with reference to the accompanying drawings.

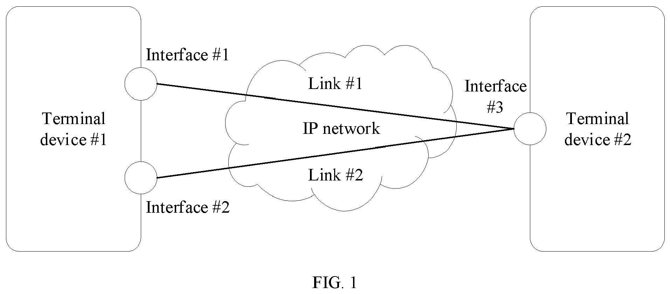

Applicable scenarios of the communication method provided in this application include a link bundling scenario. FIG. 1 is a diagram of a scenario to which an embodiment of this application is applicable.

FIG. 1 shows a terminal device #1, a terminal device #2, an interface #1 and an interface #2 in the terminal device #1, an interface #3 in the terminal device #2, a link #1 between the interface #1 and the interface #3, a link #2 between the interface #2 and the interface #3, and an internet protocol (internet protocol, IP) network.

Specifically, the terminal device #1 may be understood as a data sending device, and the terminal device #2 may be understood as a data receiving device. A plurality of links (for example, the link #1 and the link #2 shown in FIG. 1) are established between one or more physical interfaces (for example, the interface #1 and the interface #2 shown in FIG. 1) of the terminal device #1 and one or more physical interfaces (for example, the interface #3 shown in FIG. 1) of the terminal device #2.

It should be noted that the link in this application may be understood as a virtual link.

For example, a terminal device (for example, the terminal device #1 and the terminal device #2 shown in FIG. 1) supports communication using two wireless links: Wi-Fi and an LTE cellular link, or may further support 4-link communication of 2.4G, 5G, and dual LTE. When bandwidths of a plurality of links are used at the same time, a higher bandwidth and higher reliability are obtained, and a possibility of obtaining a low latency is increased. For example, the terminal device #1 sends data to the terminal device #2 through a plurality of links (for example, the link #1 and the link #2 shown in FIG. 1), and the data receiving device combines data on the plurality of links to obtain a higher bandwidth.

In addition, more types of heterogeneous links, such as power lines and network cables, may be brought into multilink bundling to expand a bandwidth.

For example, the IP network shown in FIG. 1 may be a wide area network, or may be a wireless local area network (Wi-Fi). For ease of understanding, the following briefly describes a link bundling scenario in a wide area network and a multilink bundling scenario in a wireless local area network (Wi-Fi).

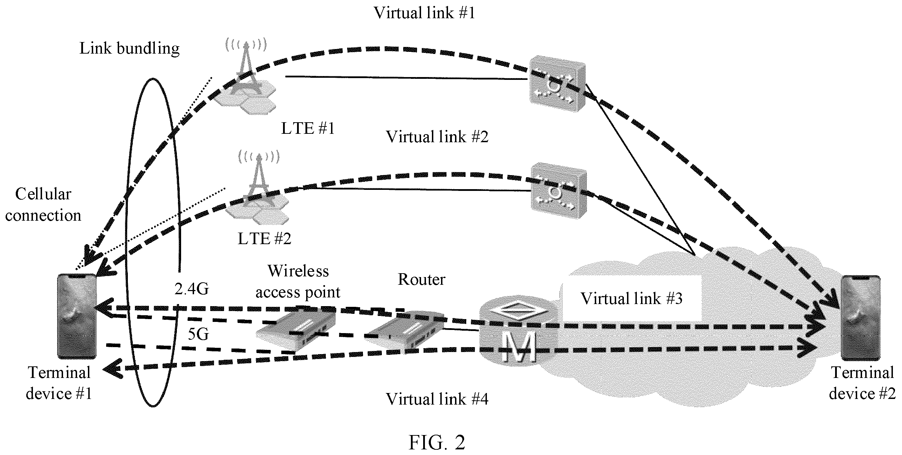

In a possible implementation, the communication method provided in this application is applicable to a multilink bundling scenario in a wide area network. FIG. 2 is a diagram of a multilink bundling scenario in a wide area network according to this application. As shown in FIG. 2, communication between two terminal devices (for example, a terminal device #1 and a terminal device #2 shown in FIG. 2) traverses a wide area network, and a plurality of virtual links with independent bandwidths are formed by using different access links (for example, a long term evolution (LTE) cellular link, a Wi-Fi 2.4G link, and a Wi-Fi 5G link).

It can be learned from FIG. 2 that, between the terminal device #1 and the terminal device #2, a virtual link #1 is formed by using an LTE #1 cellular link, a virtual link #2 is formed by using an LTE #2 cellular link, a virtual link #3 is formed by using a Wi-Fi 2.4G link, and a virtual link #4 is formed by using a Wi-Fi 5G link.

Further, the plurality of virtual links may be bundled. It can be learned from FIG. 2 that the plurality of virtual links (the virtual link #1 to the virtual link #4 shown in FIG. 2) having independent bandwidths are formed between the terminal device #1 and the terminal device #2, and may be bundled into at least one link (link bundling shown in FIG. 2).

It should be noted that FIG. 2 is merely an example for describing a link bundling scenario in a wide area network to which an embodiment of this application is applicable, and does not constitute any limitation on the protection scope of this application. For example, there may be more than two terminal devices in the link bundling scenario in the wide area network. For another example, an access link used for communication between terminal devices may include another link type. For another example, a plurality of links may be obtained by bundling a plurality of virtual links. Examples are not described one by one herein.

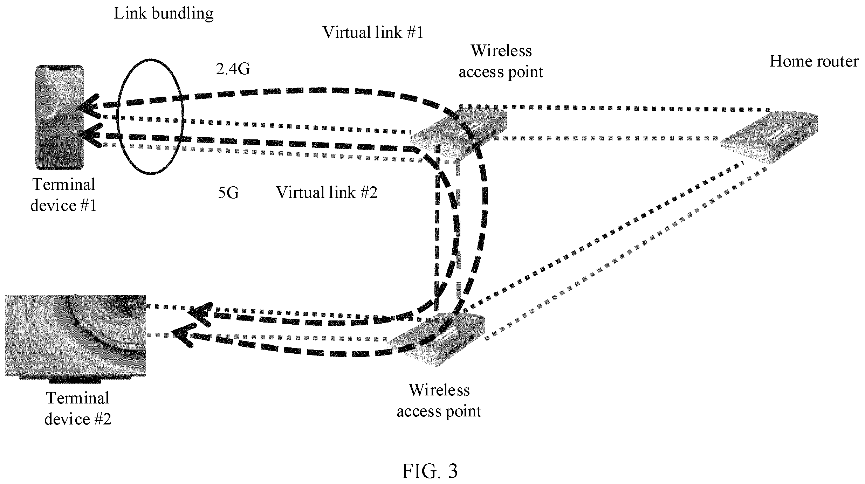

In another possible implementation, the communication method provided in this application is applicable to a multilink bundling scenario in a local area network. FIG. 3 is a diagram of a multilink bundling scenario in a local area network according to this application. As shown in FIG. 3, two terminal devices (for example, a terminal device #1 and a terminal device #2 shown in FIG. 3) communicate with each other based on Wi-Fi, and a plurality of virtual links with independent bandwidths are formed by using different access links (for example, a Wi-Fi 2.4G link and a Wi-Fi 5G link).

It can be learned from FIG. 3 that, between the terminal device #1 and the terminal device #2, a virtual link #1 is formed by using a Wi-Fi 2.4G link, and a virtual link #2 is formed by using a Wi-Fi 5G link.

Further, the plurality of virtual links may be bundled. It can be learned from FIG. 3 that the plurality of virtual links (the virtual link #1 and the virtual link #2 shown in FIG. 3) having independent bandwidths are formed between the terminal device #1 and the terminal device #2, and may be bundled into at least one link (link bundling shown in FIG. 3).

It should be noted that FIG. 3 is merely an example for describing a link bundling scenario in a local area network to which an embodiment of this application is applicable, and does not constitute any limitation on the protection scope of this application. For example, there may be more than two terminal devices in the link bundling scenario in the local area network. For another example, an access link used for communication between terminal devices may include another Wi-Fi link. For another example, a plurality of links may be obtained by bundling a plurality of virtual links. Examples are not described one by one herein.

The terminal device in embodiments of this application may be user equipment, an access terminal, a subscriber unit, a subscriber station, a mobile station (MS), a mobile terminal (MT), a remote station, a remote terminal, a mobile device, a user terminal, a terminal, a wireless communication device, a user agent, or a user apparatus. The terminal device may be a device that provides voice and data connectivity for a user, for example, a handheld device having a wireless connection function or a vehicle-mounted device. Currently, some examples of the terminal may be a mobile phone, a tablet computer (pad), a computer (for example, a notebook computer or a palmtop computer) with wireless sending and receiving functions, a mobile internet device (MID), a virtual reality (VR) device, an augmented reality (AR) device, a wireless terminal in industrial control, a wireless terminal in self-driving, a wireless terminal in telemedicine (remote medical), a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with a wireless communication function, a computing device, another processing device connected to a wireless modem, a vehicle-mounted device, a wearable device, a terminal device in a 5G network, or a terminal device in a future evolved public land mobile network (PLMN).

In addition, the terminal device may alternatively be a terminal device in an internet of things (IoT) system. IoT is an important part of future information technology development. A main technical feature of IoT is that an article is connected to a network by using a communication technology, to implement an intelligent network of man-machine interconnection and interconnection between things. The IoT technology can implement massive connections, deep coverage, and terminal power saving by using, for example, a narrow band (NB) technology.

It should be understood that the terminal device may be any device that can access a network. The terminal device may communicate with an access network device by using an air interface technology.

Optionally, the terminal device may be configured to serve as a base station. For example, the terminal device may serve as a scheduling entity that provides a sidelink signal between terminal devices in V2X, D2D, or the like. For example, a cellular phone and a car communicate with each other by using a sidelink signal. The cellular phone communicates with a smart household device without relaying a communication signal through a base station.

The foregoing briefly describes, with reference to FIG. 1 to FIG. 3, scenarios to which embodiments of this application can be applied. To facilitate understanding of the technical solutions in embodiments of this application, some terms or concepts in embodiments of this application are briefly described.

### 1. Multilink

An access manner in which a terminal device supports a plurality of wireless links is referred to as multilink access.

For example, the terminal device supports access of two wireless links: Wi-Fi and LTE.

For example, the terminal device supports 4-link access of Wi-Fi 2.4G, Wi-Fi 5G, and dual LTE.

For example, in a home network, there are more types of heterogeneous links, such as power lines and network cables.

Types of different links in the plurality of links supported by the terminal device are not limited in embodiments of this application.

It should be noted that, when bandwidths of the plurality of links are used at the same time, a higher bandwidth and higher reliability are obtained, and a possibility of obtaining a low latency is increased.

For example, in multilink transmission, a plurality of links are established between one or more physical interfaces of a data sending device and one or more physical interfaces of a data receiving device. The data sending device sends data to the data receiving device by using the plurality of links. The data receiving device combines data on the plurality of links to obtain a higher bandwidth.

### 2. Equal-cost multi-path (ECMP)

It can be learned from the foregoing description of multilink that characteristics of bandwidths, latencies, and packet loss rates of all links may be inconsistent, and a data sending device needs to perform sharing in a proper ratio on different links, to improve a transmission throughput rate and a latency. This is because a change of any link characteristic may affect performance of multilink transmission. For example, the impact includes but is not limited to the following:
(1) There is no correct scheduling technology to balance a latency, a bandwidth variability between a plurality of links may cause a transmission throughput rate to be limited by a slowest link.
(2) A high packet loss rate of a single link significantly affects transmission performance.

To avoid that a change of a link characteristic affects performance of multilink transmission, an ECMP mechanism is proposed. ECMP is a forwarding mechanism used to route a data packet along a plurality of equal-cost paths, and aims to implement almost equal-cost distributed link load balancing. In ECMP, it is assumed that all available links have similar speeds.

For example, if there are two available paths, load on each path accounts for 50% of total load.

### 3. Unequal-cost multi-path (UCMP)

It should be noted that not all paths are equal-cost paths. In this case, different weights may be set for load on different paths in UCMP. For example, when there are three available paths (for example, 1G, 10G, and 100G), in this example, a proportion of load on the 1G path to total load may be set to 1%, a proportion of load on the 10G path to the total load may be set to 10%, and a proportion of load on the 100G path to the total load may be set to 89%.

### 4. Multi-path TCP (MPTCP).

MPTCP is ongoing work of the multi-path TCP working group of the Internet Engineering Task Force (IETF), and the working group aims to allow to use a plurality of paths for a TCP connection to maximize resource utilization.

MPTCP uses a transport layer protocol for concurrent transmission on a plurality of paths, so that an end- to-end throughput rate can be improved, network utilization can be improved, and redundancy can be increased. For the MPTCP protocol, refer to RFC6824. MPTCP is fully compatible with TCP. A TCP option header is added on the basis of TCP to implement functions such as MPTCP link establishment, link disconnection, and data transmission. A typical application scenario of MPTCP may be in an access network, or may be in an enterprise network.

### 5. Multilink operation (MLO).

Wi-Fi 7 is formulating a multilink operation (MLO) standard, so that a device can simultaneously perform sending and receiving across different frequency bands and channels.

A concept of a multilink device (MLD) is introduced in a multilink architecture. The device includes several Wi-Fi devices (each Wi-Fi device has a PHY interface to wireless media), but has one interface to an LLC layer. In other words, the MLD is considered as a single device in an upper-layer protocol. Although the MLD has a plurality of physical wireless interfaces, but the MLD has one MAC address, and a sequence number is uniquely generated from same sequence number space.

### 6. Packet coloring

Packet coloring statistics collection is a network performance statistics collection technology. Accurate end- to-end or segment-based packet loss measurement is implemented for an IP packet by directly marking a service packet.

### 7. Network adapter address

The network adapter address is also referred to as a MAC address, and may also be referred to as a local area network address (LAN Address), an Ethernet address, a physical address, or the like. The network adapter address is an address for determining a location of a network device.

For example, in an open systems interconnection (OSI) model, a third-layer network layer is responsible for an IP address, and a second-layer data link layer is responsible for a MAC address. The MAC address is used to uniquely identify a network adapter in a network. If a device has one or more network adapters, each network adapter has a MAC address.

### 8. Tunnel

The tunnel may also be referred to as a link. A tunnel in the following embodiments of this application means a link formed by one or more valid network adapter addresses of a data sending device and one or more network adapter addresses of a data receiving device.

For example, if the valid network adapter addresses of the data sending device include a network adapter address #1 and a network adapter address #2, and the valid network adapter addresses of the data receiving device include a network adapter address #3 and a network adapter address #4, the tunnel includes a link between the network adapter address #1 and the network adapter address #3, a link between the network adapter address #1 and the network adapter address #4, a link between the network adapter address #2 and the network adapter address #3, and a link between the network adapter address #2 and the network adapter address #4.

### 9. Kernel

The kernel is the most basic part of an operating system, and provides a part of software for secure access to computer hardware for an app.

### 10. Tunneling-based proxy system

The tunneling-based proxy system in this application can intercept a packet, for example, intercept a packet sent by an app to a kernel; may further determine whether to perform multilink bundling, for example, determine, based on a feedback of a receiving device of a packet, whether the packet is sent through a plurality of links; and may further implement data packet distribution. For example, when a packet is sent through a plurality of links, the packet needs to be distributed.

### 11. Linux Iptable

Netfilter is a Linux 2.4 kernel firewall framework proposed by Rusty Russell. This framework is simple and flexible, and can implement many functions in a security policy application, including but not limited to:
data packet filtering, data packet processing, address masquerading, transparent proxy, dynamic network address translation (NAT), packet rate limiting, and the like.

A rule specified by Netfilter is stored in kernel memory. Linux Iptable is an application at an application layer, and modifies, through an interface, XXtables (configuration table of Netfilter) stored in the kernel memory. XXtables includes tables, chains, and rules. Linux Iptable is responsible for modifying a rule file at the application layer.

### 12. Wireless distribution system (WDS) encapsulation

WDS means that a plurality of wireless networks are connected to each other to form an overall wireless network. Briefly, WDS means that two (or more) wireless broadband routers (or APs) are connected to each other to extend a wireless signal to a wider range. In a WDS technology, APs can be interconnected without using a conventional wired network. Each AP can function as a primary device, a relay device, or a remote device.

Compared with that of another wireless extension technology, a significant feature of the WDS technology is that a MAC address of a client is retained when data is transmitted between APs. In addition, data transmission of the client relates to only the MAC address and does not relate to an IP address.

It can be learned from ECMP and UCMP described in the foregoing basic concepts that, in ECMP or UCMP, when a data packet is shared, according to a fixed sharing ratio, on a plurality of links having dynamic bandwidth data, inaccurate sharing may occur, causing a packet loss on some links and an idle bandwidth on some links. This affects overall bandwidth utilization, a latency, and packet loss performance. Inaccurate sharing includes but is not limited to the following:

For example, Wi-Fi is used as an example. A Wi-Fi bandwidth that can be obtained by a terminal device is affected by bandwidth usage of another terminal device served by a same wireless access point (AP), and is also affected by a change of a distance between the terminal device and the AP, and the bandwidth keeps changing.

For another example, in a dynamic bandwidth scenario such as an overlay network, a cellular link of a mobile phone, or Wi-Fi link bundling, dynamic load balancing cannot be implemented, resulting in problems of low link bandwidth utilization and a high packet loss rate.

In addition, MPTCP mentioned in the foregoing basic concepts cannot support a user datagram protocol (UDP) service. High-throughput-rate and real-time services usually use the UDP protocol.

For example, MPTCP cannot support a video call application.

In addition, the MLO mentioned in the foregoing basic concepts does not support bundling of heterogeneous links.

For example, the MLO does not support bundling between Wi-Fi and a cellular link.

It can be learned from the foregoing that a current multi-path bundling manner either depends on modifying an app to invoke a new transmission protocol (for example, an MPTCP manner) that supports link aggregation, or does not support bundling of heterogeneous links (for example, an MLO manner). In addition, currently, data packet sharing between a plurality of links may be inaccurate.

To avoid the problem that occurs in path bundling and the problem that occurs in data packet sharing between a plurality of links, this application provides a communication method. An application is unaware of path bundling, the application does not need to be modified to invoke a new transmission protocol, and bundling of heterogeneous links can be supported.

In addition, to facilitate understanding of embodiments of this application, the following descriptions are provided.

First, in this application, "indicate" may include "directly indicate" and "indirectly indicate". When a piece of indication information is described as indicating A, the indication information may directly indicate A or indirectly indicate A, but it does not mean that the indication information necessarily includes A.

Second, "first", "second", and various numerical numbers (for example, "#1" and "#2") in this application are merely used for distinguishing for ease of description, but are not intended to limit the scope of embodiments of this application. For example, different information is distinguished.

Third, "storage" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Fourth, the "protocol" in embodiments of this application may be a standard protocol in the communication field, for example, may include an LTE protocol, a Wi-Fi protocol, and a related protocol applied to a future communication system. This is not limited in this application.

It should be understood that a specific structure of an execution body of a method provided in embodiments of this application is not specifically limited in embodiments shown below, provided that a program that records code for the method provided in embodiments of this application can be run to perform communication according to the method provided in embodiments of this application. For example, the execution body of the method provided in embodiments of this application may be a terminal device or a function module that can invoke and execute a program in a terminal device.

Without loss of generality, the following describes in detail a communication method in embodiments of this application by using interaction between a data sending device and a data receiving device as an example.

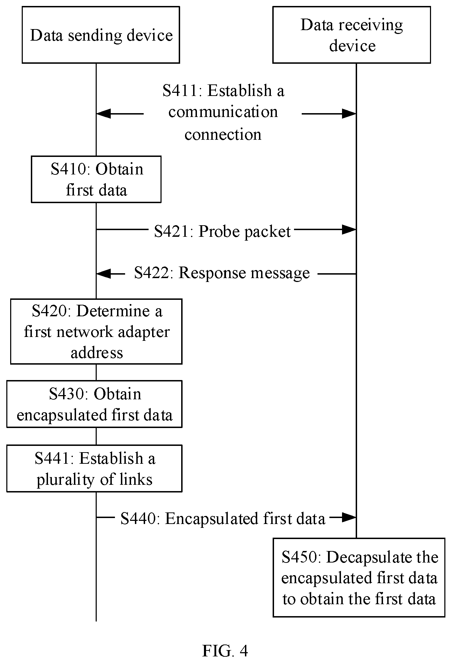

FIG. 4 is a schematic flowchart of a communication method according to this application. The method includes the following steps.

S410: A data sending device obtains first data.

The first data includes to-be-sent data of a first application installed on the data sending device. A destination address of the first data is an address of a data receiving device.

For example, the address of the data receiving device may be an IP address (for example, the data receiving device is a device in a wide area network), or may be a MAC address (for example, the data receiving device is a device in a local area network).

For ease of description, the address of the data receiving device may be referred to as a destination address below.

The data sending device in this embodiment of this application may be a terminal device, or may be a network device (for example, an access network device or a core network device that communicates with a terminal device).

It should be understood that a specific type of the data sending device is not limited in this embodiment of this application, and the data sending device may be any device that can send data.

Specifically, the first application (APP) is an app installed on the data sending device.

For example, the first application may be an app that is installed on the data sending device and that is used for communication, or may be an app that is installed on the data sending device and that is used for health monitoring.

It should be understood that a specific type of the first app is not limited in this embodiment of this application, and the first app may be any app that is installed on the data sending device and that needs to send the first data to the data receiving device.

For example, the to-be-sent first data of the first application may be a to-be-sent packet, to-be-sent control signaling, to-be-sent information, or the like of the first application.

It should be understood that specific content of the first data is not limited in this embodiment of this application, and may be understood as the to-be-sent information of the first application.

In a possible implementation, that the data sending device obtains the first data includes:

A first tunneling-based proxy system in the data sending device intercepts the first data sent by the first app to a first kernel of the data sending device.

For example, when the first app needs to send the first data to the data receiving device, the first app may send the first data to the first kernel of the data sending device.

For example, the first app implements data communication by invoking a TCP socket or a UDP socket, to send the first data to the first kernel of the sending device.

Specifically, the first tunneling-based proxy system intercepts, by using Linux Iptable, the data sent by the first app to the first kernel.

For example, a firewall Iptable service is enabled, and an Iptable external access filtering rule is added.

In another possible implementation, that the data sending device obtains the first data includes:
The first app sends, to a first tunneling-based proxy system in the data sending device, the first data to be sent to the data receiving device.

In another possible implementation, that the data sending device obtains the first data includes:
A first tunneling-based proxy system in the data sending device determines the to-be-sent first data of the first app based on a historical data sending record.

It should be noted that, in this embodiment of this application, how the data sending device obtains the first data that is of the locally installed first app and that is to be sent to the data receiving device is not limited. The foregoing listed obtaining manners are merely examples and do not constitute any limitation on the protection scope of this application.

Optionally, in this embodiment of this application, before (or after or when) the data sending device obtains the to-be-sent first data of the first app, a communication connection between the data sending device and the data receiving device is established. The method procedure shown in FIG. 4 further includes the following step.

S411: Establish the communication connection.

For example, the first app installed on the data sending device is started, an IP address of the data receiving device is discovered by using a discovery mechanism similar to that of a domain name system (DNS), a central registration server, or the like, and a TCP connection or a UDP connection is established to the data receiving device.

It should be noted that, in this embodiment of this application, how to establish the communication connection between the data sending device and the data receiving device is not limited. For details, refer to descriptions in a current related technology, for example, a communication establishment procedure between a data sending device and a data receiving device.

Further, after obtaining the first data, the data sending device may determine, based on the destination address, a first network adapter address corresponding to the destination address. The method procedure shown in FIG. 4 further includes the following step.

S420: Determine the first network adapter address.

The first network adapter address is an address or addresses of one or more network adapters of the data receiving device.

Specifically, the first tunneling-based proxy system in the data sending device searches a local record table based on the destination address of the first data sent by the first app.

In a possible implementation, the first network adapter address corresponding to the destination address already exists in the local record table of the data sending device.

In this implementation, the data sending device may determine, based on the destination address and information that has been recorded in the record table, the first network adapter address corresponding to the destination address.

For example, the local record table of the data sending device includes information related to the destination address, and the information related to the destination address includes the first network adapter address corresponding to the destination address.

For example, the information that is related to the destination address and that is included in the record table may be learned of in the following manners.

Manner 1: Before sending the first data, the data sending device has sent second data whose destination address is the destination address to the data receiving device. In a process of sending the second data, the information related to the destination address is recorded in the local record table.

Manner 2: The data sending device obtains the information related to the destination address from another device (for example, a management device).

Manner 3: The information related to the destination address may be predefined in a protocol.

It should be noted that a reason why the local record table of the data sending device includes the information related to the destination address is not limited in this application.

Optionally, the record table may be referred to as a tunnel record table, or may be referred to as a link record table.

In another possible implementation, the first network adapter address corresponding to the destination address does not exist in the local record table of the data sending device.

In this implementation, the data sending device needs to start a probe procedure, to probe whether the data receiving device supports network adapter address-based data decapsulation (or probe whether the data receiving device supports a tunnel proxy function). The method procedure shown in FIG. 4 further includes the following step.

S421: The data sending device sends a probe packet to the data receiving device, or the data receiving device receives a probe packet from the data sending device.

Specifically, the probe packet is used to probe whether the data receiving device supports network adapter address-based data decapsulation. A specific format of the probe packet is not limited in this embodiment of this application, and the probe packet may be any packet that can be used to probe whether the data receiving device supports the tunnel proxy function.

For example, the probe packet may also be referred to as probe information or information.

It should be noted that a name of a message is not limited in this application, and any message that can implement a function of the message falls within the protection scope of this application.

After the data sending device sends the probe packet to the data receiving device, depending on whether the data receiving device supports the tunnel proxy function, a probe result may include the following two possibilities.

Possibility 1: The data receiving device supports the tunnel proxy function.

In the possibility 1, the method procedure shown in FIG. 4 further includes the following step.

S422: The data receiving device sends a response message to the data sending device, or the data sending device receives a response message from the data receiving device.

The data receiving device sends the response message (which may be referred to as a first response message for ease of differentiation) to the data sending device. The first response message indicates that the data receiving device supports the tunnel proxy function.

For example, the first response message includes the first network adapter address.

For example, the first network adapter address and the first response message are separately sent to the data sending device.

In the possibility 1, the tunneling-based proxy system in the data sending device records a dynamic entry for the destination IP (for example, adds the first network adapter address corresponding to the destination address to the local record table).

Possibility 2: The data receiving device does not support the tunnel proxy function.

In the possibility 2, the data receiving device may not respond to the probe packet. For example, the data sending device does not receive, within a period of time, a response message that is from the data receiving device and that is used to respond to the probe packet. The period of time may be preset, or may be determined by the data sending device and the data receiving device through negotiation.

Alternatively, in the possibility 2, the data receiving device sends a second response message to the data sending device. The second response message indicates that the data receiving device does not support the tunnel proxy function. For example, the second response message indicates that an Internet control message protocol (ICMP) port is unreachable (ICMP port unreachable).

In this implementation, it may be understood that the probe fails, that is, the data receiving device does not support the tunnel proxy function. For the first data, an original sending manner and encapsulation may be maintained.

For example, the sending manner of the first data is ECMP sending or UCMP sending. In this embodiment of this application, when the data receiving device does not support the tunnel proxy function, the sending manner and the encapsulation manner of the first data are not limited.

In this embodiment of this application, a case in which the data receiving device supports the tunnel proxy function is mainly considered. A case in which the data receiving device does not support the tunnel proxy function is not shown in FIG. 4.

Further, after the first network adapter address corresponding to the destination address is determined, the first data may be encapsulated based on the first network adapter address to obtain encapsulated first data. The method shown in FIG. 4 further includes the following step.

S430: Encapsulate the first data based on the first network adapter address to obtain the encapsulated first data.

Specifically, the data sending device adds link encapsulation to the first data. Because link encapsulation is implemented based on the first network adapter address, an address (or a port) of the first data remains unchanged in a link. No additional intra-link address needs to be allocated, and no operating system kernel of the data sending device needs to be modified.

For example, that the data sending device encapsulates the first data based on the first network adapter address to obtain the encapsulated first data may be understood as: The data sending device encapsulates a part of the first data based on a network adapter address corresponding to a specific link, and sends the part of encapsulated data through the link.

Further, after obtaining the encapsulated first data, the data sending device may send the encapsulated first data to the data receiving device through a plurality of links. The method shown in FIG. 4 further includes the following step.

S440: The data sending device sends the encapsulated first data to the data receiving device through the plurality of links, or the data receiving device receives the encapsulated first data from the data sending device through the plurality of links.

A destination address of each of the plurality of links is one address in the first network adapter address, a source address of each of the plurality of links is one address in a second network adapter address, and the second network adapter address is an address or addresses of one or more network adapters of the data sending device.

It should be noted that a type of the link is not limited in this embodiment of this application. For example, the link may be one of link mechanisms such as a UDP link, an Ethernet VLAN link, a MACinMAC link, and an IP link. Heterogeneous link bundling is supported, and it is not limited to types such as wireless link, wired link, Wi-Fi, and cellular. Bandwidth bundling between a plurality of links improves an available network bandwidth. In addition, communication reliability can be improved through multilink bundling.

For example, that the data sending device sends the encapsulated first data to the data receiving device through the plurality of links includes:
a distribution module corresponding to a first wireless interface of the data sending device segments the first data into a first data packet and a second data packet, where the second data packet is distributed to a second wireless interface of the data sending device;
the first wireless interface of the data sending device sends an encapsulated first data packet to the data receiving device through the first link; and
the second wireless interface of the data sending device sends an encapsulated second data packet to the data receiving device through a second link.

It should be noted that the first data packet may be one or more data packets, and the second data packet may also be one or more data packets.

For ease of understanding, an example is used to describe how the data sending device sends the encapsulated first data to the data receiving device through the plurality of links.

For example, an application of the data sending device invokes a socket API or another module of a kernel to send the generated first data to the first wireless interface (for example, a first wireless Wi-Fi driver), and the distribution module of the first wireless interface segments the first data into data packets, adds sequence numbers to the data packets, and then distributes some data packets to a data distribution module of the second wireless interface (for example, a wireless interface Wi-Fi driver other than the first wireless Wi-Fi driver) based on a distribution policy and a device MAC address mapping table.

A data packet other than the foregoing some data packets is encapsulated and then sent to a sending buffer of the first wireless interface.

The data distribution module of the second wireless interface performs WDS encapsulation on the distributed data packets based on the device MAC address mapping table and information about the second wireless interface, and sends the data packets to a sending buffer of the second wireless interface.

The data packets in the sending buffer are sent according to an existing procedure.

The data receiving device performs data check and reassembly on the received data packets based on the device MAC address mapping table and a buffering policy, to restore a data packet sequence.

It should be noted that a premise on which the data sending device can send the encapsulated first data to the data receiving device through the plurality of links is that the plurality of links have been established. The method shown in FIG. 4 further includes the following step.

S441: Establish the plurality of links based on the first network adapter address and the second network adapter address.

Specifically, the tunneling-based proxy system in the data sending device forms an arrangement and combination of link connections based on one or more local valid network adapter addresses (for example, the second network adapter address) and one or more network adapter addresses (for example, the first network adapter address) of the data receiving device.

Optionally, a link connection may be periodically measured, and an invalid connection is removed.

Further, the data receiving device may decapsulate the received encapsulated first data to obtain the first data. The method procedure shown in FIG. 4 further includes the following step.

S450: The data receiving device decapsulates the encapsulated first data to obtain the first data.

Specifically, the data receiving device receives the encapsulated first data through the plurality of links, and then the data receiving device decapsulates the encapsulated first data based on the first network adapter address, to obtain the first data.

For ease of understanding, the following describes, with reference to specific embodiments, application of the multilink bundling method provided in this application in a wide area network and a local area network.

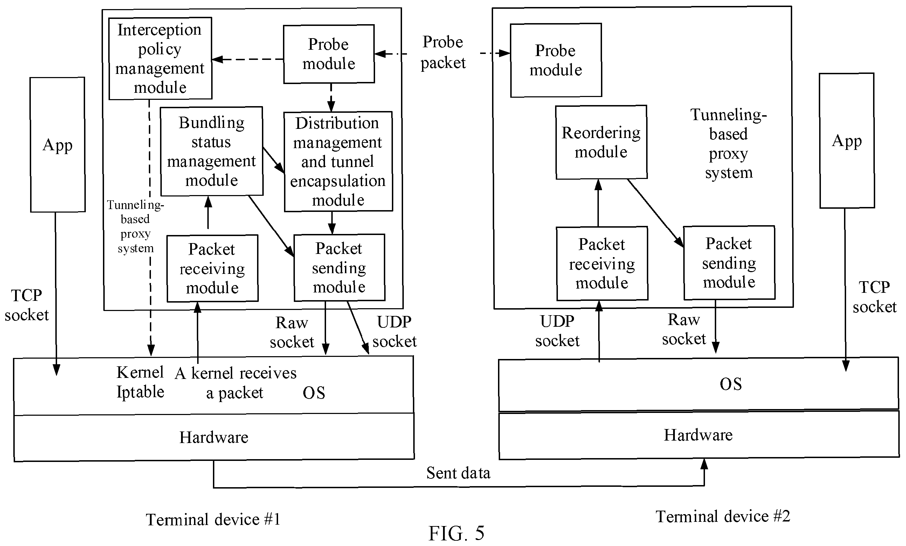

For example, a wide area network-oriented link bundling architecture is shown in FIG. 5. FIG. 5 is a diagram of multilink bundling data transmission in a wide area network according to this application.

It can be learned from FIG. 5 that terminal devices in the multilink bundling architecture in the wide area network are classified into a data sending device and a data receiving device (as shown in FIG. 5, a terminal device #1 is a data sending device, and a terminal device #2 is a data receiving device).

Specifically, both the data sending device and the data receiving device relate to invoking of a user mode module and a kernel mode module. In the data sending device, an app implements data communication by invoking a TCP or UDP socket (for example, the app shown in FIG. 5 invokes the TCP socket to send data to a kernel). A tunneling-based proxy system filters and intercepts data of a target app by configuring an IP table of the kernel. An interception policy is managed by an interception policy management module. An intercepted data packet is sent to a packet receiving module. The packet receiving module sends intercepted data to a bundling status management module. The bundling status management module determines, based on a feedback indicating whether the data receiving device can perform bundling, whether a subsequent data packet is sent to a distribution management module or directly sent to a packet sending module for direct packet sending.

Further, for a data packet sent to the distribution management module, link (or tunnel) encapsulation is performed based on different connections for distribution, and then the data packet is sent to the packet sending module. The packet sending module invokes the UDP socket to send the link data.

A probe module further exists between the data sending device and the data receiving device, and is configured to probe a status such as whether the data receiving device is alive (for example, online or offline). After receiving the data packet by using hardware and an operating system (OS), the data receiving device sends the data packet to the packet receiving module in a user mode for processing. The packet receiving module sends the data packet to a reordering module, to decapsulate and reorder the data packet, and then the data packet is sent to the packet sending module. The packet sending module invokes a raw socket to send the data packet to the OS, and then the app receives the data packet.

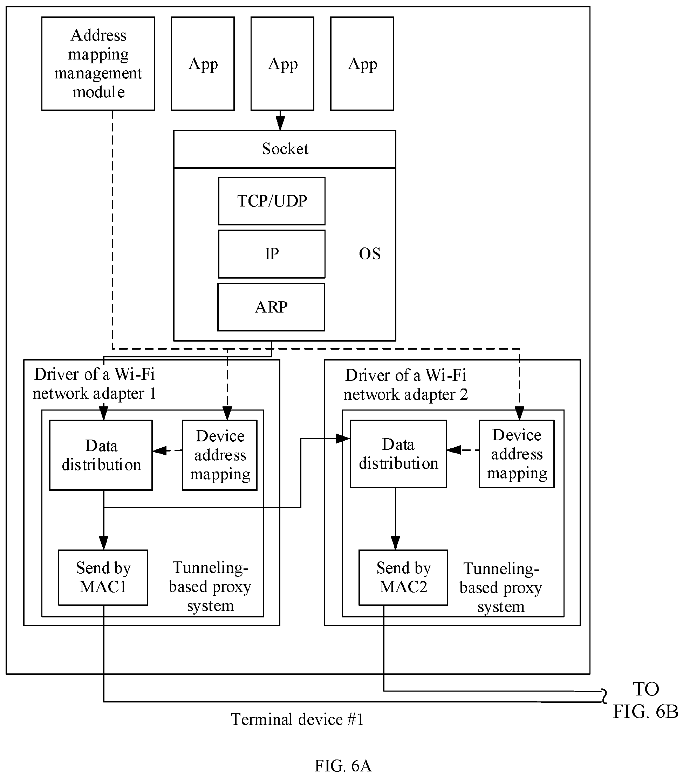

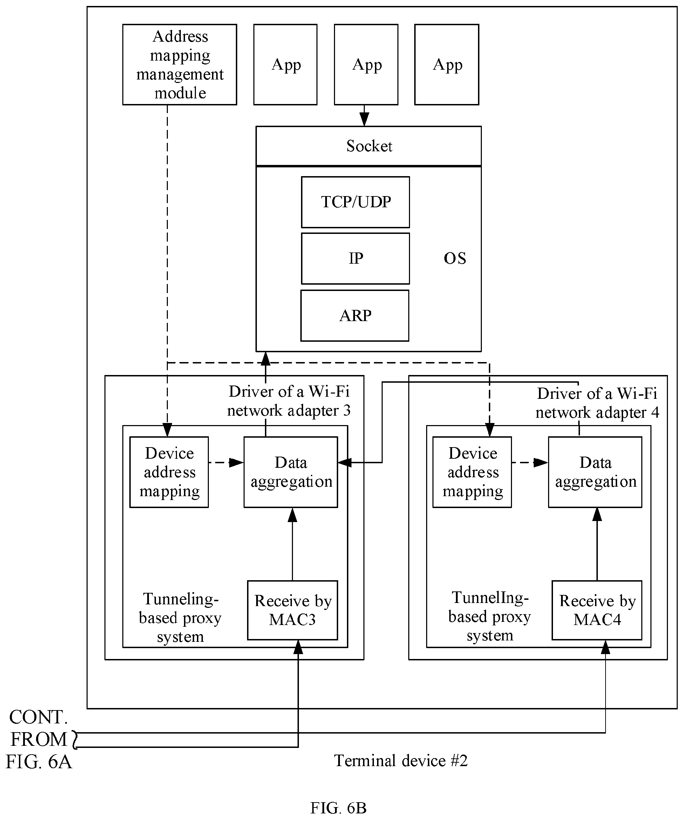

For example, a local area network-oriented multilink bundling architecture is shown in FIG. 6A and FIG. 6B. FIG. 6A and FIG. 6B are a diagram of multilink bundling data transmission in a local area network according to this application.

It can be learned from FIG. 6A and FIG. 6B that terminal devices in the multilink bundling architecture in the local area network are classified into a data sending device and a data receiving device (as shown in FIG. 6A and FIG. 6B, a terminal device #1 is a data sending device, and a terminal device #2 is a data receiving device).

Specifically, data to be sent by an application of the data sending device is processed by an OS, and is sent to a Wi-Fi network adapter 1. A tunneling-based proxy system in a driver of the Wi-Fi network adapter 1 starts to perform data distribution, some data packets are directly sent from media access control 1 (MAC1) of a local interface, and other data packets are sent to a Wi-Fi network adapter 2 based on a MAC address MAC2 of the network adapter 2 provided by address mapping management. After receiving the data packet, a data distribution module of the Wi-Fi network adapter 2 sends the data packet to an interface MAC2 of the local network adapter for sending to the outside.

A data packet received by a network adapter 4 of the data receiving device arrives at a data aggregation module, and data is sent to a data aggregation module of a network adapter 3 based on a MAC address MAC3 of the network adapter 3 provided by the address mapping management. The data aggregation module of the network adapter 3 receives the data received by the network adapter 3 and the data sent by the network adapter 4, performs aggregation processing, and sends the data to the OS.

It can be learned from the data transmission procedures shown in FIG. 5 and FIG. 6A and FIG. 6B that, in a scenario of network communication between communication terminals, an application installed on the terminal is completely transparent, and the application does not need to be modified to invoke a new transmission protocol, so that the application is unaware, and a system determines that data of a specific application is suitable for transmission on a bundled path.

In addition, it should be noted that FIG. 5 and FIG. 6A and FIG. 6B are merely examples for describing application scenarios of this application, and do not constitute any limitation on the protection scope of this application. This application is specific to a networking scenario in which a communication terminal is used as a start point, may be used for link bundling of Wi-Fi 2.4G and 5G in a local area network, and may be used for link bundling of a Wi-Fi link and a cellular link in a wide area network.

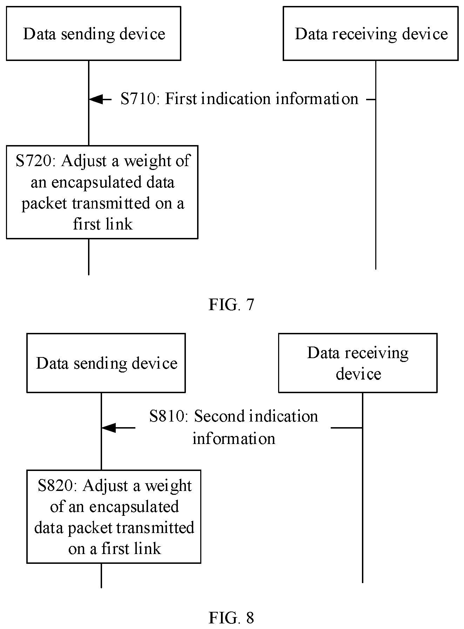

Further, this application further provides a method for dynamically adjusting sharing weights of a plurality of links. Through measurement on a one-way latency change, measurement on a packet loss rate, one-way latency change feedback, and packet loss feedback, time synchronization does not need to be performed between communication terminals. This avoids that a large quantity of ACK packets occupy network resources in the conventional technology, and is especially beneficial on a Wi-Fi network. In addition, through dynamic weight adjustment, accurate dynamic sharing is implemented, so that a bundled bandwidth that can be obtained by the communication terminal is increased. With reference to FIG. 7 and FIG. 8, the following describes in detail the method for dynamically adjusting the share weights of the plurality of links.

FIG. 7 is a schematic flowchart of another communication method according to an embodiment of this application. The method includes the following steps.

S710: A data receiving device sends first indication information to a data sending device, or a data sending device receives first indication information from a data receiving device.

The first indication information indicates a latency difference between two encapsulated data packets transmitted through a first link. The first link is any one of a plurality of links.

In all implementation, for an encapsulated data packet sent on any link, the data receiving device calculates a latency difference between every two encapsulated data packets with consecutive sequence numbers.

For example, if the data receiving device learns through calculation that a latency of an encapsulated data packet whose sequence number is #1 and that is sent on the first link is 1 ms (which may be obtained through calculation by using a sending timestamp and a receiving moment), and the data receiving device learns through calculation that a latency of an encapsulated data packet whose sequence number is #2 and that is sent on the first link is 2 ms, a latency difference between the latency of the encapsulated data packet whose sequence number is #1 and the latency of the encapsulated data packet whose sequence number is #2 is 1 ms.

In another possible implementation, for an encapsulated data packet sent on any link, the data receiving device calculates a latency difference between two encapsulated data packets that are separated by a fixed quantity of data packets.

For example, the data receiving device learns through calculation that a latency of an encapsulated data packet #1 sent on the first link is 1 ms, the data receiving device learns through calculation that a latency of an encapsulated data packet #2 sent on the first link is 3 ms, there are Q encapsulated data packets between the encapsulated data packet #1 and the encapsulated data packet #2, and Q is a positive integer. In this case, a latency difference between the latency of the encapsulated data packet #1 and the latency of the encapsulated data packet #2 is 2 ms.

For example, the latency difference may be referred to as a one-way latency variation value.

It should be noted that the foregoing is merely an example for describing how the data receiving device calculates the one-way latency variation value, and does not constitute any limitation on the protection scope of this application. Another method for calculating the one-way latency variation value also falls within the protection scope of this application.

For example, the data receiving device indicates the latency difference by using the first indication information because the latency difference exceeds a threshold (which may be referred to as a preset threshold) for determining a steady state of a network. For example, the latency difference exceeds N*round-trip time (RTT), where N is a positive integer. For another example, the latency difference exceeds a predefined latency (for example, 1 ms). It should be noted that a value of the preset threshold is not limited in this embodiment of this application, and may be determined by the data receiving device and the data sending device through negotiation, may be determined by the data receiving device, or may be predefined in a protocol.

Further, the data sending device adjusts, based on the received first indication information, weights of encapsulated data packets transmitted on the plurality of links. The method procedure shown in FIG. 7 further includes the following step.

S720: The data sending device adjusts a weight of an encapsulated data packet transmitted on the first link.

For example, that the data sending device adjusts, based on the first indication information, the weight of the encapsulated data packet transmitted on the first link includes:
The data sending device adjusts, based on the latency difference, the weight of the encapsulated data packet transmitted on the first link. Specifically, an adjusted weight of the encapsulated data packet transmitted on the first link is less than the unadjusted weight of the encapsulated data packet transmitted on the first link.

For example, the weight of the encapsulated data packet transmitted on the first link and the latency difference satisfy the following formula:
$M 1 = M / T .$

M1 represents the adjusted weight of the encapsulated data packet transmitted on the first link, M represents the unadjusted weight of the encapsulated data packet transmitted on the first link, and T represents the latency difference.

For ease of understanding, the following uses an example to describe the method for dynamically adjusting the share weights of the plurality of links shown in FIG. 7.

For example, bandwidths of two links are bundled. An upper-layer application of the data sending device sends an encapsulated data packet to a distribution module at a specific rate, and the distribution module blindly starts packet-by-packet sharing according to a fixed ratio 1:1 or a static bandwidth ratio (for example, 5:1).

When the data sending device sends encapsulated data packets on a plurality of different links, an encapsulated data packet on each link is marked with an independent sequence number, that is, the encapsulated data packet on each link has an independent sequence number.

The sequence number may be a sequential natural number, or the sequence number may be an accumulated quantity of sent bytes, or may be numbered in another manner. This is not limited in this application.

The link may be one of link mechanisms such as a UDP link, an Ethernet VLAN link, a MACinMAC link, and an IP link.

For an encapsulated data packet sent on any link, the data receiving device calculates a latency difference between every two encapsulated data packets with consecutive sequence numbers or between two encapsulated data packets separated by a fixed quantity of encapsulated data packets, that is, a one-way latency variation value, and records the value.

When the one-way latency variation value increases and exceeds a threshold for determining a steady state of a network, the data receiving device sends the first indication information to the data sending device, where the first indication information carries the one-way latency variation value.

The data sending device receives the first indication information, and adjusts a sharing weight based on the one-way latency variation value.

For example, an original ratio is that scheduling weights of 5:1 are used between a link #1 and a link #2, a one-way latency variation value received by the link #1 is 2 ms, and the distribution module is triggered to adjust the weights. Adjusted weights are 5:2 (that is, (5/2):1). If the one-way latency variation value of the link #1 continues to increase, the distribution module continues to adjust the weights, and adjusted weights are 5:4 (that is, ((5/2)/2):1). When the one-way latency variation value of the link #1 no longer changes, a last adjustment result (for example, 5:4) may be maintained. When the one-way latency variation value of the link #1 or the link #2 changes, weights are adjusted. For example, if the one-way latency variation value of the link #2 increases to 2 ms, the weights are adjusted to 5:2 (((5/2)/2):(1/2)).

FIG. 8 is a schematic flowchart of another communication method according to an embodiment of this application. The method includes the following steps.

S810: A data receiving device sends second indication information to a data sending device, or a data sending device receives second indication information from a data receiving device.

The second indication information indicates a first packet loss rate of a first link. The first link is any one of a plurality of links.

For example, the data receiving device calculates a packet loss rate of a data packet in a specific period (for example, in a current measurement period) in a manner such as data packet coloring or determining using a sequence number.

When a measured packet loss rate is greater than a packet loss threshold, the data receiving device sends the second indication information to the data sending device, where the second indication information carries the first packet loss rate (for example, a packet loss rate in a latest period). The packet loss threshold may be predefined, or may be determined through negotiation between the data receiving device and the data sending device, or may be delivered by a management device. This is not limited in this application.

Further, the data sending device may adjust, based on the received second indication information, a weight of an encapsulated data packet transmitted on the first link. The method procedure shown in FIG. 8 further includes the following step.

S820: The data sending device adjusts the weight of the encapsulated data packet transmitted on the first link.

For example, that the data sending device adjusts, based on the second indication information, the weight of the encapsulated data packet transmitted on the first link includes:
the data sending device adjusts the weight of the encapsulated data packet transmitted on the first link, where
an adjusted weight of the encapsulated data packet transmitted on the first link is less than the unadjusted weight of the encapsulated data packet transmitted on the first link.

It may be understood that the data sending device receives the second indication information, and adjusts the sharing weight based on the packet loss rate, where the weight adjustment is in a decreasing direction.

Optionally, when the sharing weight is adjusted based on the packet loss rate, it is expected that all links maintain a same packet loss rate.

It should be noted that, in this embodiment, the data sending device may determine whether weights of encapsulated data packets transmitted on the plurality of links need to be adjusted. In this case, before S820 is performed, the method procedure shown in FIG. 8 may further include the following step.

S821: The data sending device determines that the weight of the encapsulated data packet transmitted on the first link needs to be adjusted.

Specifically, when whether the weight of the encapsulated data packet transmitted on the first link needs to be adjusted is determined, comparison with a packet loss rate (for example, a latest known packet loss rate locally stored in the data sending device) of another link needs to be performed.

The data sending device determines that the first packet loss rate is greater than a second packet loss rate. The second packet loss rate is a packet loss rate of a second link, and the second link is one or more links other than the first link in the plurality of links. The packet loss rate of the second link is a latest packet loss rate (for example, a packet loss rate in a previous measurement period) that is of the second link and that is locally stored in the data sending device.

In a possible form, if the second packet loss rate is not zero, that is, a packet loss occurs on all other links, whether a packet loss rate of a current link is greater than a packet loss rate of any link is determined. If the packet loss rate of the current link is greater than a packet loss rate of any link, a weight of the current link needs to be adjusted.

Alternatively, in another possible form, if the second packet loss rate is zero, that is, there is another link on which no packet loss occurs in all other links, a weight of a current link needs to be adjusted.

For example, the data sending device always records a minimum packet loss rate in all links. After a packet loss rate of any link is updated, the data sending device compares the packet loss rate with a recorded packet loss rate. If the packet loss rate is greater than the recorded packet loss rate, the data sending device adjusts a weight of the current link; or if the packet loss rate is less than or equal to the recorded packet loss rate, the data sending device does not perform adjustment.

It should be understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

For example, the embodiment shown in FIG. 4 and the embodiment shown in FIG. 7 may be combined. After multilink bundling transmission is implemented based on the embodiment shown in FIG. 4, weights of a plurality of links are adjusted based on the embodiment shown in FIG. 7.

For another example, the embodiment shown in FIG. 4 and the embodiment shown in FIG. 8 may be combined. After multilink bundling transmission is implemented based on the embodiment shown in FIG. 4, weights of a plurality of links are adjusted based on the embodiment shown in FIG. 8.

It should be further understood that in some of the foregoing embodiments, a device in an existing network architecture is mainly used as an example for description (for example, a data sending device or a data receiving device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the data sending device or the data receiving device) may also be implemented by a component (for example, a chip or a circuit) of the device.

The communication method provided in embodiments of this application is described in detail above with reference to FIG. 4 to FIG. 8. The foregoing communication method is mainly described from a perspective of interaction between the data sending device and the data receiving device. It may be understood that, to implement the foregoing functions, each network element includes a corresponding hardware structure and/or software module for executing the functions.

A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

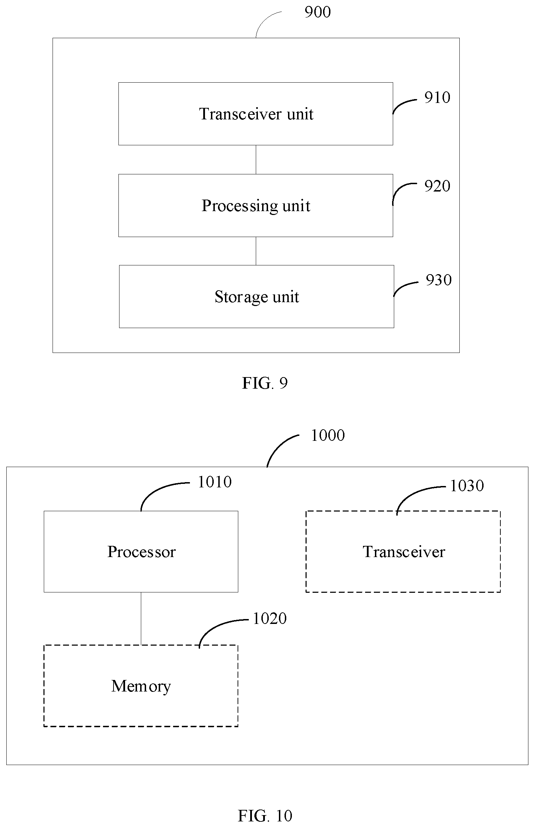

The communication apparatus provided in embodiments of this application is described below in detail with reference to FIG. 9 and FIG. 10. It should be understood that descriptions of apparatus embodiments correspond to the descriptions of the method embodiments. Therefore, for content that is not described in detail, refer to the foregoing method embodiments. For brevity, some content is not described again.

In embodiments of this application, a sending device or a receiving device may be divided into function modules according to the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of this application is an example, and is merely logical function division. In actual implementation, there may be another division manner. An example in which each function module is obtained through division based on each corresponding function is used below for description.

FIG. 9 is a block diagram of an apparatus 900 according to an embodiment of this application. The apparatus 900 includes a transceiver unit 910, a processing unit 920, and a storage unit 930. The transceiver unit 910 may implement a corresponding communication function, and the transceiver unit 910 may also be referred to as a communication interface or a communication unit. The processing unit 920 is configured to perform data processing. The storage unit 930 is configured to store instructions and/or data. The processing unit 920 may read the instructions and/or the data in the storage unit, so that the apparatus implements the foregoing method embodiments.

The apparatus 900 may be configured to perform an action performed by a device (for example, the sending device or the receiving device) in the foregoing method embodiments. In this case, the apparatus 900 may be a device or a component that can be configured in a device. The transceiver unit 910 is configured to perform a receiving/sending-related operation of the device in the foregoing method embodiments, and the processing unit 920 is configured to perform a processing-related operation of the device in the foregoing method embodiments.

In a design, the apparatus 900 is configured to perform actions performed by the data sending device in the foregoing method embodiments.

The processing unit 920 is configured to obtain first data, where the first data includes to-be-sent data of a first application installed on the data sending device, and a destination address of the first data is an address of a data receiving device.

The processing unit 920 is further configured to determine, based on the address of the data receiving device, a first network adapter address corresponding to the address of the data receiving device, where the first network adapter address is an address or addresses of one or more network adapters of the data receiving device.

The processing unit 920 is further configured to encapsulate the first data based on the first network adapter address to obtain encapsulated first data.

The transceiver unit 910 is configured to send the encapsulated first data to the data receiving device through a plurality of links.

A destination address of each of the plurality of links is one address in the first network adapter address, a source address of each of the plurality of links is one address in a second network adapter address, and the second network adapter address is an address or addresses of one or more network adapters of the data sending device.

Optionally, the transceiver unit 910 is further configured to send a probe packet to the data receiving device, where the probe packet is used to probe whether the data receiving device supports network adapter address-based data decapsulation.

The transceiver unit 910 is further configured to receive a response message from the data receiving device, where the response message indicates that the data receiving device supports network adapter address-based data decapsulation.

Optionally, the response message includes the first network adapter address.

Optionally, the processing unit 920 is further configured to establish the plurality of links based on the first network adapter address and the second network adapter address.

Optionally, the first data includes a plurality of data packets, and the encapsulated first data includes a plurality of encapsulated data packets.

That the transceiver unit 910 sends the encapsulated first data to the data receiving device through the plurality of links includes: The transceiver unit 910 sends the plurality of encapsulated data packets to the data receiving device through a first link.

The transceiver unit 910 is further configured to receive first indication information from the data receiving device, where the first indication information indicates a latency difference between two encapsulated data packets transmitted through the first link.

The processing unit 920 is further configured to adjust, based on the first indication information, weights of the encapsulated data packets transmitted on the plurality of links.

The first link is any one of the plurality of links.

Optionally, an adjusted weight of the encapsulated data packet transmitted on the first link is less than the unadjusted weight of the encapsulated data packet transmitted on the first link.

Optionally, the transceiver unit 910 is further configured to receive second indication information from the data receiving device, where the second indication information indicates a first packet loss rate of a first link.

The processing unit 920 is further configured to adjust, based on the second indication information, a weight of an encapsulated data packet transmitted on the first link.

The first link is any one of the plurality of links.

Optionally, the first packet loss rate is greater than a second packet loss rate, an adjusted weight of the encapsulated data packet transmitted on the first link is less than the unadjusted weight of the encapsulated data packet transmitted on the first link, and the second packet loss rate is a packet loss rate that is of a link other than the first link and that is locally stored in the data sending device.

The apparatus 900 may implement the steps or procedures performed by the data sending device in the method embodiments according to embodiments of this application. The apparatus 900 may include units configured to perform the method performed by the data sending device in the method embodiments. In addition, the units in the apparatus 900 and the foregoing other operations and/or functions are separately used to implement corresponding procedures of the method embodiment of the data sending device in the method embodiments.

When the apparatus 900 is configured to perform the method in FIG. 4, the transceiver unit 910 may be configured to perform steps of sending and receiving information in the method, for example, steps S421, S422, and S440; and the processing unit 920 may be configured to perform processing steps in the method, for example, steps S410, S420, S430, and S441.

When the apparatus 900 is configured to perform the method in FIG. 7, the transceiver unit 910 may be configured to perform steps of sending and receiving information in the method, for example, step S710; and the processing unit 920 may be configured to perform processing steps in the method, for example, step S720.

When the apparatus 900 is configured to perform the method in FIG. 8, the transceiver unit 910 may be configured to perform steps of sending and receiving information in the method, for example, step S810; and the processing unit 920 may be configured to perform processing steps in the method, for example, step S820.

It should be understood that a specific process in which the units perform the foregoing corresponding steps is described in detail in the foregoing method embodiments. For brevity, details are not described herein.

In another design, the apparatus 900 is configured to perform actions performed by the data receiving device in the foregoing method embodiments.

The transceiver unit 910 is configured to receive encapsulated first data from a data sending device through a plurality of links.

The processing unit 920 is configured to decapsulate the encapsulated first data based on a first network adapter address to obtain first data.

The first data includes to-be-sent data of a first application installed on the data sending device, a destination address of the first data is an address of the data receiving device, the address of the data receiving device corresponds to the first network adapter address, the first network adapter address is an address or addresses of one or more network adapters of the data receiving device, and the encapsulated first data is data obtained by encapsulating the first data based on the first network adapter address.

Optionally, the transceiver unit 910 is configured to receive a probe packet from the data sending device, where the probe packet is used to probe whether the data receiving device supports network adapter address-based data decapsulation.

The transceiver unit 910 is configured to send a response message to the data sending device, where the response message includes the first network adapter address, and the response message indicates that the data receiving device supports network adapter address-based data decapsulation.

Optionally, the response message includes the first network adapter address.

Optionally, the first data includes a plurality of data packets, and the encapsulated first data includes a plurality of encapsulated data packets. That the transceiver unit 910 receives the encapsulated first data from the data sending device through the plurality of links includes: The transceiver unit 910 receives the plurality of encapsulated data packets from the data sending device through a first link.

The transceiver unit 910 is configured to send first indication information to the data sending device, where the first indication information indicates a latency difference between two encapsulated data packets transmitted through the first link, the latency difference is used to adjust a weight of an encapsulated data packet transmitted on the first link, and the first link is any one of the plurality of links.

Optionally, an adjusted weight of the encapsulated data packet transmitted on the first link is less than the unadjusted weight of the encapsulated data packet transmitted on the first link.

Optionally, the transceiver unit 910 is configured to send second indication information to the data sending device, where the second indication information indicates a first packet loss rate of a first link, the first packet loss rate is used to adjust a weight of an encapsulated data packet transmitted on the first link, and the first link is any one of the plurality of links.

Optionally, the first packet loss rate is greater than a second packet loss rate, an adjusted weight of the encapsulated data packet transmitted on the first link is less than the unadjusted weight of the encapsulated data packet transmitted on the first link, and the second packet loss rate is a packet loss rate that is of a link other than the first link and that is locally stored in the data sending device.

The apparatus 900 may implement the steps or procedures performed by the data receiving device in the method embodiments according to embodiments of this application. The apparatus 900 may include units configured to perform the method performed by the data receiving device in the method embodiments. In addition, the units in the apparatus 900 and the foregoing other operations and/or functions are separately used to implement corresponding procedures of the method embodiment of the data receiving device in the method embodiments.

When the apparatus 900 is configured to perform the method in FIG. 4, the transceiver unit 910 may be configured to perform steps of sending and receiving information in the method, for example, steps S421, S422, and S440; and the processing unit 920 may be configured to perform processing steps in the method, for example, step S450.

When the apparatus 900 is configured to perform the method in FIG. 7, the transceiver unit 910 may be configured to perform steps of sending and receiving information in the method, for example, step S710.

When the apparatus 900 is configured to perform the method in FIG. 8, the transceiver unit 910 may be configured to perform steps of sending and receiving information in the method, for example, step S810.

It should be understood that a specific process in which the units perform the foregoing corresponding steps is described in detail in the foregoing method embodiments. For brevity, details are not described herein.

The processing unit 920 in the foregoing embodiments may be implemented by at least one processor or a processor-related circuit. The transceiver unit 910 may be implemented by a transceiver or a transceiver-related circuit. The storage unit may be implemented by at least one memory.

As shown in FIG. 10, an embodiment of this application further provides an apparatus 1000. The apparatus 1000 includes a processor 1010, and may further include one or more memories 1020.

The processor 1010 is coupled to the memory 1020. The memory 1020 is configured to store a computer program or instructions and/or data. The processor 1010 is configured to execute the computer program or the instructions and/or the data stored in the memory 1020, so that the method in the foregoing method embodiments is performed.

Optionally, as shown in FIG. 10, the apparatus 1000 may further include a transceiver 1030. The transceiver 1030 is configured to receive a signal and/or send a signal. For example, the processor 1010 is configured to control the transceiver 1030 to receive a signal and/or send a signal.

The processor 1010 in FIG. 10 may be the processing unit 920 in FIG. 9, and implements a function of the processing unit 920. For specific operations performed by the processor 1010, refer to the foregoing descriptions of the processing unit 920. Details are not described herein again. The transceiver 1030 in FIG. 10 may be the transceiver unit 910 in FIG. 9, and implements a function of the transceiver unit 910. For specific operations performed by the transceiver 1030, refer to the foregoing descriptions of the transceiver unit 910. Details are not described herein again. The memory 1020 in FIG. 10 may be the storage unit 930 in FIG. 9, and implements a function of the storage unit 930.

Optionally, the apparatus 1000 includes one or more processors 1010.

Optionally, the memory 1020 and the processor 1010 may be integrated together, or may be disposed separately.

In a solution, the apparatus 1000 is configured to implement operations performed by a device (for example, the data receiving device or the data sending device) in the foregoing method embodiments.

An embodiment of this application further provides a computer-readable storage medium. The computer-readable storage medium stores computer instructions used to implement a method performed by a device (for example, the data receiving device or the data sending device) in the foregoing method embodiments.

An embodiment of this application further provides a computer program product including instructions. When the instructions are executed by a computer, the computer is enabled to implement a method performed by a device (for example, the data receiving device or the data sending device) in the foregoing method embodiments.

An embodiment of this application further provides a communication system. The communication system includes the device (for example, the data receiving device or the data sending device) in the foregoing embodiments.

An embodiment of this application further provides a chip apparatus, including a processing circuit. The processing circuit is configured to invoke a program from a memory and run the program, so that a communication device on which the chip apparatus is installed implements a method performed by a device (for example, the data receiving device or the data sending device) in the foregoing method embodiments.

For explanations and beneficial effect of related content of any one of the apparatuses provided above, refer to the corresponding method embodiment provided above. Details are not described herein again.

It should be understood that the processor in embodiments of this application may be a central processing unit (CPU), or may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM). For example, the RAM may be used as an external cache. By way of example and not limitation, the RAM may include a plurality of forms, such as a static random access memory (SRAM), a dynamic random access memory (DRAM), a synchronous dynamic random access memory (SDRAM), double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on specific applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, function units in embodiments of this application may be integrated into one unit, or each unit may exist alone physically, or two or more units may be integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a sending device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk (SSD)), or the like. For example, the usable medium may include but is not limited to any medium that can store program code, for example, a USB flash drive, a removable hard disk, a read-only memory (ROM), a random access memory (RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application as defined by the appended claims.

## Claims

1. A communication method, comprising:
obtaining (S410), by a data sending device, first data, wherein the first data comprises to-be-sent data of a first application installed on the data sending device, and a destination address of the first data is an address of a data receiving device;
determining (S420), by the data sending device based on the address of the data receiving device, a first network adapter address corresponding to the address of the data receiving device, wherein the first network adapter address is an address or addresses of one or more network adapters of the data receiving device;
encapsulating (S430), by the data sending device, the first data based on the first network adapter address to obtain encapsulated first data; and
sending (S440), by the data sending device, the encapsulated first data to the data receiving device through a plurality of links, wherein
a destination address of each of the plurality of links is one address in the first network adapter address, a source address of each of the plurality of links is one address in a second network adapter address, and the second network adapter address is an address or addresses of one or more network adapters of the data sending device;
, wherein
the first data comprises a plurality of data packets, and the encapsulated first data comprises a plurality of encapsulated data packets;
the sending, by the data sending device, the encapsulated first data to the data receiving device through a plurality of links comprises:
sending, by the data sending device, the plurality of encapsulated data packets to the data receiving device through a first link; and
the method further comprises:
receiving, by the data sending device, first indication information from the data receiving device, wherein the first indication information indicates a latency difference between two encapsulated data packets transmitted through the first link, and the latency difference is greater than a preset threshold; and
adjusting, by the data sending device based on the first indication information, a weight of an encapsulated data packet transmitted on the first link, wherein
the first link is any one of the plurality of links.

2. The method according to claim 1, wherein the method further comprises:
sending, by the data sending device, a probe packet to the data receiving device, wherein the probe packet is used to probe whether the data receiving device supports network adapter address-based data decapsulation; and
receiving, by the data sending device, a response message from the data receiving device, wherein the response message indicates that the data receiving device supports network adapter address-based data decapsulation.

3. The method according to claim 2, wherein the response message comprises the first network adapter address.

4. The method according to any one of claims 1 to 3, wherein the method further comprises:
establishing, by the data sending device, the plurality of links based on the first network adapter address and the second network adapter address.

5. The method according to any one of claims 1 to 4, wherein
an adjusted weight of the encapsulated data packet transmitted on the first link is less than the unadjusted weight of the encapsulated data packet transmitted on the first link.

6. The method according to any one of claims 1 to 5, wherein the method further comprises:
receiving, by the data sending device, second indication information from the data receiving device, wherein the second indication information indicates a first packet loss rate of a first link; and
adjusting, by the data sending device based on the second indication information, a weight of an encapsulated data packet transmitted on the first link.

7. The method according to claim 6, wherein the first packet loss rate is greater than a second packet loss rate, an adjusted weight of the encapsulated data packet transmitted on the first link is less than the unadjusted weight of the encapsulated data packet transmitted on the first link, and the second packet loss rate is a packet loss rate that is of a link other than the first link and that is locally stored in the data sending device.

8. The method according to any one of claims 1 to 7, wherein the sending, by the data sending device, the encapsulated first data to the data receiving device through a plurality of links comprises:
segmenting, by a distribution module corresponding to a first wireless interface of the data sending device, the first data into a first data packet and a second data packet, wherein the second data packet is distributed to a second wireless interface of the data sending device;
sending, by the first wireless interface of the data sending device, an encapsulated first data packet to the data receiving device through the first link; and
sending, by the second wireless interface of the data sending device, an encapsulated second data packet to the data receiving device through a second link.

9. A communication method, comprising:
receiving (S440), by a data receiving device, encapsulated first data from a data sending device through a plurality of links; and
decapsulating (S450), by the data receiving device, the encapsulated first data based on a first network adapter address to obtain first data, wherein
the first data comprises to-be-sent data of a first application installed on the data sending device, a destination address of the first data is an address of the data receiving device, the address of the data receiving device corresponds to the first network adapter address, the first network adapter address is an address or addresses of one or more network adapters of the data receiving device, and the encapsulated first data is data obtained by encapsulating the first data based on the first network adapter address;
wherein
the first data comprises a plurality of data packets, and the encapsulated first data comprises a plurality of encapsulated data packets;
the receiving, by a data receiving device, encapsulated first data from a data sending device through a plurality of links comprises:
receiving, by the data receiving device, the plurality of encapsulated data packets from the data sending device through a first link; and
the method further comprises:
sending, by the data receiving device, first indication information to the data sending device, wherein the first indication information indicates a latency difference between two encapsulated data packets transmitted through the first link, the latency difference is used to adjust a weight of an encapsulated data packet transmitted on the first link, the latency difference is greater than a preset threshold, and the first link is any one of the plurality of links.

10. The method according to claim 9, wherein the method further comprises:
receiving, by the data receiving device, a probe packet from the data sending device, wherein the probe packet is used to probe whether the data receiving device supports network adapter address-based data decapsulation; and
sending, by the data receiving device, a response message to the data sending device, wherein the response message indicates that the data receiving device supports network adapter address-based data decapsulation.

11. The method according to claim 10, wherein the response message comprises the first network adapter address.

12. The method according to claim 11, wherein an adjusted weight of the encapsulated data packet transmitted on the first link is less than the unadjusted weight of the encapsulated data packet transmitted on the first link.

13. A communication apparatus (1000), comprising:
a memory (1020), configured to store a computer program; and
a processor (1010), configured to execute the computer program stored in the memory (1020), so that the communication apparatus (1000) performs the method according to any one of claims 1 to 8, or the communication apparatus (1000) performs the method according to any one of claims 9 to 12.

14. A computer program product comprising instructions, wherein when the instructions are run, an apparatus is enabled to perform the method according to any one of claims 1 to 8, or an apparatus is enabled to perform the method according to any one of claims 9 to 12.

15. A chip system, comprising: a processor, configured to invoke a computer program from a memory and run the computer program, so that a communication apparatus on which the chip system is installed performs the method according to any one of claims 1 to 8, or a communication apparatus on which the chip system is installed performs the method according to any one of claims 9 to 12.

## Patentansprüche

1. Kommunikationsverfahren, Folgendes umfassend:
Erhalten (S410) erster Daten durch ein Datensendegerät, wobei die ersten Daten zu sendende Daten einer ersten Anwendung umfassen, die auf dem Datensendegerät installiert ist, und eine Zieladresse der ersten Daten eine Adresse eines Datenempfangsgeräts ist,
Bestimmen (S420) einer ersten Netzwerkadapteradresse, die der Adresse des Datenempfangsgeräts entspricht, durch das Datensendegerät, basierend auf der Adresse des Datenempfangsgeräts, wobei die erste Netzwerkadapteradresse eine Adresse oder Adressen eines oder mehrerer Netzwerkadapter des Datenempfangsgeräts ist,
Verkapseln (S430) der ersten Daten durch das Datensendegerät, basierend auf der ersten Netzwerkadapteradresse, um verkapselte erste Daten zu erhalten, und
Senden (S440) der verkapselten ersten Daten durch das Datensendegerät an das Datenempfangsgerät durch mehrere Verbindungen, wobei
eine Zieladresse jeder der mehreren Verbindungen eine Adresse in der ersten Netzwerkadapteradresse ist, eine Quelladresse jeder der mehreren Verbindungen eine Adresse in einer zweiten Netzwerkadapteradresse ist und die zweite Netzwerkadapteradresse eine Adresse oder Adressen von einem oder mehreren Netzwerkadaptern des Datensendegeräts ist,
wobei:
die ersten Daten mehrere Datenpakete umfassen und die verkapselten ersten Daten mehrere verkapselte Datenpakete umfassen,
das Senden der verkapselten ersten Daten an das Datenempfangsgerät durch mehrere Verbindungen durch das Datensendegerät Folgendes umfasst:
Senden der mehreren verkapselten Datenpakete an das Datenempfangsgerät durch eine erste Verbindung durch das Datensendegerät, und
wobei das Verfahren ferner Folgendes umfasst:
Empfangen erster Angabeinformationen von dem Datenempfangsgerät durch das Datensendegerät, wobei die ersten Angabeinformationen eine Latenzdifferenz zwischen zwei verkapselten Datenpaketen angeben, die durch die erste Verbindung übertragen werden, und die Latenzdifferenz größer als ein voreingestellter Schwellenwert ist, und
Justieren einer Gewichtung eines verkapselten Datenpakets, das über die erste Verbindung übertragen wird, durch das Datensendegerät, basierend auf den ersten Angabeinformationen, wobei
die erste Verbindung eine beliebige der mehreren Verbindungen ist.

2. Verfahren nach Anspruch 1, wobei das Verfahren ferner Folgendes umfasst:
Senden eines Testpakets durch das Datensendegerät an das Datenempfangsgerät, wobei das Testpaket verwendet wird, um zu testen, ob das Datenempfangsgerät eine Datenentkapselung auf Basis von Netzwerkadapteradressen unterstützt, und
Empfangen einer Antwortnachricht von dem Datenempfangsgerät durch das Datensendegerät, wobei die Antwortnachricht angibt, dass das Datenempfangsgerät eine Datenentkapselung auf Basis von Netzwerkadapteradressen unterstützt.

3. Verfahren nach Anspruch 2, wobei die Antwortnachricht die erste Netzwerkadapteradresse umfasst.

4. Verfahren nach einem der Ansprüche 1 bis 3, wobei das Verfahren ferner Folgendes umfasst:
Einrichten der mehreren Verbindungen durch das Datensendegerät, basierend auf der ersten Netzwerkadapteradresse und der zweiten Netzwerkadapteradresse.

5. Verfahren nach einem der Ansprüche 1 bis 4, wobei
eine justierte Gewichtung des verkapselten Datenpakets, das auf der ersten Verbindung übertragen wird, niedriger als die unjustierte Gewichtung des verkapselten Datenpakets ist, das auf der ersten Verbindung übertragen wird.

6. Verfahren nach einem der Ansprüche 1 bis 5, wobei das Verfahren ferner Folgendes umfasst:
Empfangen zweiter Angabeinformationen von dem Datenempfangsgerät durch das Datensendegerät, wobei die zweiten Angabeinformationen eine erste Paketverlustrate einer ersten Verbindung angeben, und
Justieren einer Gewichtung eines verkapselten Datenpakets, das auf der ersten Verbindung übertragen wird, durch das Datensendegerät, basierend auf den zweiten Angabeinformationen.

7. Verfahren nach Anspruch 6, wobei die erste Paketverlustrate größer als eine zweite Paketverlustrate ist, eine justierte Gewichtung des verkapselten Datenpakets, das auf der ersten Verbindung übertragen wird, niedriger als die unjustierte Gewichtung des verkapselten Datenpakets ist, das auf der ersten Verbindung übertragen wird, und die zweite Paketverlustrate eine Paketverlustrate ist, die zu einer anderen Verbindung als der ersten Verbindung gehört und die lokal in dem Datensendegerät gespeichert ist.

8. Verfahren nach einem der Ansprüche 1 bis 7, wobei das Senden der verkapselten ersten Daten durch mehrere Verbindungen an das Datenempfangsgerät durch das Datensendegerät Folgendes umfasst:
Segmentieren der ersten Daten in ein erstes Datenpaket und ein zweites Datenpaket durch ein Verteilungsmodul, das einer ersten drahtlosen Schnittstelle des Datensendegeräts entspricht, wobei das zweite Datenpaket an eine zweite drahtlose Schnittstelle des Datensendegeräts verteilt wird,
Senden eines verkapselten ersten Datenpakets an das Datenempfangsgerät durch die erste Verbindung durch die erste drahtlose Schnittstelle des Datensendegeräts, und
Senden eines verkapselten zweiten Datenpakets an das Datenempfangsgerät durch eine zweite Verbindung durch die zweite drahtlose Schnittstelle des Datensendegeräts.

9. Kommunikationsverfahren, Folgendes umfassend:
Empfangen (S440) verkapselter erster Daten von einem Datensendegerät durch mehrere Verbindungen durch ein Datenempfangsgerät, und
Entkapseln (S450) der verkapselten ersten Daten durch das Datenempfangsgerät, basierend auf einer ersten Netzwerkadapteradresse, um erste Daten zu erhalten,
wobei
die ersten Daten zu sendende Daten einer ersten Anwendung umfassen, die auf dem Datensendegerät installiert ist, eine Zieladresse der ersten Daten eine Adresse des Datenempfangsgeräts ist, die Adresse des Datenempfangsgeräts der ersten Netzwerkadapteradresse entspricht, die erste Netzwerkadapteradresse eine Adresse oder Adressen von einem oder mehreren Netzwerkadaptern des Datenempfangsgeräts ist und die verkapselten ersten Daten Daten sind, die durch Verkapseln der ersten Daten basierend auf der ersten Netzwerkadapteradresse erhalten werden,
wobei
die ersten Daten mehrere Datenpakete umfassen und die verkapselten ersten Daten mehrere verkapselte Datenpakete umfassen,
das Empfangen der verkapselten ersten Daten von einem Datensendegerät durch mehrere Verbindungen durch ein Datenempfangsgerät Folgendes umfasst:
Empfangen der mehreren verkapselten Datenpakete von dem Datensendegerät durch eine erste Verbindung durch das Datenempfangsgerät, und
wobei das Verfahren ferner Folgendes umfasst:
Senden erster Angabeinformationen an das Datensendegerät durch das Datenempfangsgerät, wobei die ersten Angabeinformationen eine Latenzdifferenz zwischen zwei verkapselten Datenpaketen angeben, die durch die erste Verbindung übertragen werden, die Latenzdifferenz verwendet wird, um eine Gewichtung eines verkapselten Datenpakets zu justieren, das auf der ersten Verbindung übertragen wird, die Latenzdifferenz größer als ein voreingestellter Grenzwert ist, und die erste Verbindung eine beliebige der mehreren Verbindungen ist.

10. Verfahren nach Anspruch 9, wobei das Verfahren ferner Folgendes umfasst:
Empfangen eines Testpakets von dem Datensendegerät durch das Datenempfangsgerät, wobei das Testpaket verwendet wird, um zu testen, ob das Datenempfangsgerät eine Datenentkapselung auf Basis von Netzwerkadapteradressen unterstützt, und
Senden einer Antwortnachricht an das Datensendegerät durch das Datenempfangsgerät, wobei die Antwortnachricht angibt, dass das Datenempfangsgerät eine Datenentkapselung auf Basis von Netzwerkadapteradressen unterstützt.

11. Verfahren nach Anspruch 10, wobei die Antwortnachricht die erste Netzwerkadapteradresse umfasst.

12. Verfahren nach Anspruch 11, wobei eine justierte Gewichtung des verkapselten Datenpakets, das auf der ersten Verbindung übertragen wird, niedriger als die unjustierte Gewichtung des verkapselten Datenpakets ist, das auf der ersten Verbindung übertragen wird.

13. Kommunikationsvorrichtung (1000), Folgendes umfassend:
einen Speicher (1020), der dafür konfiguriert ist, ein Computerprogramm zu speichern, und
einen Prozessor (1010), der dafür konfiguriert ist, das in dem Speicher (1020) gespeicherte Computerprogramm derart auszuführen, dass die Kommunikationsvorrichtung (1000) das Verfahren nach einem der Ansprüche 1 bis 8 durchführt oder die Kommunikationsvorrichtung (1000) das Verfahren nach einem der Ansprüche 9 bis 12 durchführt.

14. Computerprogrammprodukt, Anweisungen umfassend, wobei, wenn die Anweisungen abgearbeitet werden, eine Vorrichtung in die Lage versetzt wird, das Verfahren nach einem der Ansprüche 1 bis 8 durchzuführen, oder eine Vorrichtung in die Lage versetzt wird, das Verfahren nach einem der Ansprüche 9 bis 12 durchzuführen.

15. Chip-System, Folgendes umfassend: einen Prozessor, der dafür konfiguriert ist, ein Computerprogramm aus einem Speicher aufzurufen und das Computerprogramm derart abzuarbeiten, dass eine Kommunikationsvorrichtung, auf der das Chip-System installiert ist, das Verfahren nach einem der Ansprüche 1 bis 8 durchführt oder eine Kommunikationsvorrichtung, auf der das Chip-System installiert ist, das Verfahren nach einem der Ansprüche 9 bis 12 durchführt.

## Revendications

1. Procédé de communication, comprenant :
l'obtention (S410), par un dispositif d'envoi de données, de premières données, les premières données comprenant des données à envoyer d'une première application installée sur le dispositif d'envoi de données, et une adresse de destination des premières données étant une adresse d'un dispositif de réception de données ;
la détermination (S420), par le dispositif d'envoi de données sur la base de l'adresse du dispositif de réception de données, d'une première adresse d'adaptateur réseau correspondant à l'adresse du dispositif de réception de données, la première adresse d'adaptateur réseau étant une adresse ou des adresses d'un ou de plusieurs adaptateurs réseau du dispositif de réception de données ;
l'encapsulation (S430), par le dispositif d'envoi de données, des premières données sur la base de la première adresse d'adaptateur réseau afin d'obtenir des premières données encapsulées ; et
l'envoi (S440), par le dispositif d'envoi de données, des premières données encapsulées au dispositif de réception de données par l'intermédiaire d'une pluralité de liaisons,
une adresse de destination de chacune de la pluralité de liaisons étant une adresse dans la première adresse d'adaptateur réseau, une adresse source de chacune de la pluralité de liaisons étant une adresse dans une deuxième adresse d'adaptateur réseau, et la deuxième adresse d'adaptateur réseau étant une adresse ou des adresses d'un ou de plusieurs adaptateurs réseau du dispositif d'envoi de données ;
les premières données comprenant une pluralité de paquets de données, et les premières données encapsulées comprenant une pluralité de paquets de données encapsulés ;
l'envoi, par le dispositif d'envoi de données, des premières données encapsulées au dispositif de réception de données par l'intermédiaire d'une pluralité de liaisons comprenant :
l'envoi, par le dispositif d'envoi de données, de la pluralité de paquets de données encapsulés au dispositif de réception de données par l'intermédiaire d'une première liaison ; et
le procédé comprenant en outre :
la réception, par le dispositif d'envoi de données, de premières informations d'indication en provenance du dispositif de réception de données, les premières informations d'indication indiquant une différence de latence entre deux paquets de données encapsulés transmis par l'intermédiaire de la première liaison, et la différence de latence étant supérieure à un seuil prédéfini ; et
l'ajustement, par le dispositif d'envoi de données sur la base des premières informations d'indication, d'un poids d'un paquet de données encapsulé transmis sur la première liaison,
la première liaison étant l'une quelconque de la pluralité de liaisons.

2. Procédé selon la revendication 1, le procédé comprend en outre :
l'envoi, par le dispositif d'envoi de données, d'un paquet de sonde au dispositif de réception de données, le paquet de sonde étant utilisé pour sonder si le dispositif de réception de données prend ou non en charge une décapsulation de données basée sur une adresse d'adaptateur réseau ; et
la réception, par le dispositif d'envoi de données, d'un message de réponse en provenance du dispositif de réception de données, le message de réponse indiquant que le dispositif de réception de données prend en charge une décapsulation de données basée sur une adresse d'adaptateur réseau.

3. Procédé selon la revendication 2, dans lequel le message de réponse comprend la première adresse d'adaptateur réseau.

4. Procédé selon l'une quelconque des revendications 1 à 3, le procédé comprenant en outre :
l'établissement, par le dispositif d'envoi de données, de la pluralité de liaisons sur la base de la première adresse d'adaptateur réseau et de la deuxième adresse d'adaptateur réseau.

5. Procédé selon l'une quelconque des revendication 1 à 4, dans lequel
un poids ajusté du paquet de données encapsulé transmis sur la première liaison est inférieur au poids non ajusté du paquet de données encapsulé transmis sur la première liaison.

6. Procédé selon l'une quelconque des revendications 1 à 5, le procédé comprenant en outre :
la réception, par le dispositif d'envoi de données, de deuxièmes informations d'indication en provenance du dispositif de réception de données, les deuxièmes informations d'indication indiquant un premier taux de perte de paquets d'une première liaison ; et
l'ajustement, par le dispositif d'envoi de données sur la base des deuxièmes informations d'indication, d'un poids d'un paquet de données encapsulé transmis sur la première liaison.

7. Procédé selon la revendication 6, dans lequel le premier taux de perte de paquets est supérieur à un deuxième taux de perte de paquets, un poids ajusté du paquet de données encapsulé transmis sur la première liaison est inférieur au poids non ajusté du paquet de données encapsulé transmis sur la première liaison, et le deuxième taux de perte de paquets est un taux de perte de paquets d'une liaison autre que la première liaison qui est stocké localement dans le dispositif d'envoi de données.

8. Procédé selon l'une quelconque des revendications 1 à 7, dans lequel l'envoi, par le dispositif d'envoi de données, des premières données encapsulées au dispositif de réception de données par l'intermédiaire d'une pluralité de liaisons comprend :
la segmentation, par un module de distribution correspondant à une première interface sans fil du dispositif d'envoi de données, des premières données en un premier paquet de données et un deuxième paquet de données, le deuxième paquet de données étant distribué à une deuxième interface sans fil du dispositif d'envoi de données ;
l'envoi, par la première interface sans fil du dispositif d'envoi de données, d'un premier paquet de données encapsulé au dispositif de réception de données par l'intermédiaire de la première liaison ; et
l'envoi, par la deuxième interface sans fil du dispositif d'envoi de données, d'un deuxième paquet de données encapsulé au dispositif de réception de données par l'intermédiaire d'une deuxième liaison.

9. Procédé de communication, comprenant :
la réception (S440), par un dispositif de réception de données, de premières données encapsulées en provenance d'un dispositif d'envoi de données par l'intermédiaire d'une pluralité de liaisons ; et
la décapsulation (S450), par le dispositif de réception de données, des premières données encapsulées sur la base d'une première adresse d'adaptateur réseau afin d'obtenir des premières données,
les premières données comprenant des données à envoyer d'une première application installée sur le dispositif d'envoi de données, une adresse de destination des premières données étant une adresse du dispositif de réception de données, l'adresse du dispositif de réception de données correspondant à la première adresse d'adaptateur réseau, la première adresse d'adaptateur réseau étant une adresse ou des adresses d'un ou de plusieurs adaptateurs réseau du dispositif de réception de données, et les premières données encapsulées étant des données obtenues par encapsulation des premières données sur la base de la première adresse d'adaptateur réseau ;
les premières données comprenant une pluralité de paquets de données, et les premières données encapsulées comprenant une pluralité de paquets de données encapsulés ;
la réception, par un dispositif de réception de données, de premières données encapsulées en provenance d'un dispositif d'envoi de données par l'intermédiaire d'une pluralité de liaisons comprenant :
la réception, par le dispositif de réception de données, de la pluralité de paquets de données encapsulés en provenance du dispositif d'envoi de données par l'intermédiaire d'une première liaison ; et
le procédé comprenant en outre :
l'envoi, par le dispositif de réception de données, de premières informations d'indication au dispositif d'envoi de données, les premières informations d'indication indiquant une différence de latence entre deux paquets de données encapsulés transmis par l'intermédiaire de la première liaison, la différence de latence étant utilisée pour ajuster un poids d'un paquet de données encapsulé transmis sur la première liaison, la différence de latence étant supérieure à un seuil prédéfini, et la première liaison étant l'une quelconque de la pluralité de liaisons.

10. Procédé selon la revendication 9, le procédé comprenant en outre :
la réception, par le dispositif de réception de données, d'un paquet de sonde en provenance du dispositif d'envoi de données, le paquet de sonde étant utilisé pour sonder si le dispositif de réception de données prend ou non en charge une décapsulation de données basée sur une adresse d'adaptateur réseau ; et
l'envoi, par le dispositif de réception de données, d'un message de réponse au dispositif d'envoi de données, le message de réponse indiquant que le dispositif de réception de données prend en charge une décapsulation de données basée sur une adresse d'adaptateur réseau.

11. Procédé selon la revendication 10, dans lequel le message de réponse comprend la première adresse d'adaptateur réseau.

12. Procédé selon la revendication 11, dans lequel un poids ajusté du paquet de données encapsulé transmis sur la première liaison est inférieur au poids non ajusté du paquet de données encapsulé transmis sur la première liaison.

13. Appareil de communication (1000), comprenant :
une mémoire (1020), configurée pour stocker un programme d'ordinateur ; et
un processeur (1010), configuré pour exécuter le programme d'ordinateur stocké dans la mémoire (1020), de sorte que l'appareil de communication (1000) réalise le procédé selon l'une quelconque des revendications 1 à 8 ou que l'appareil de communication (1000) réalise le procédé selon l'une quelconque des revendications 9 à 12.

14. Produit programme d'ordinateur comprenant des instructions, lesquelles instructions, lorsqu'elles sont exécutées, amènent un appareil à réaliser le procédé selon l'une quelconque des revendications 1 à 8 ou amènent un appareil à réaliser le procédé selon l'une quelconque des revendications 9 à 12.

15. Système de puce, comprenant : un processeur, configuré pour appeler un programme d'ordinateur depuis une mémoire et exécuter le programme d'ordinateur, de sorte qu'un appareil de communication sur lequel le système de puce est installé réalise le procédé selon l'une quelconque des revendications 1 à 8 ou qu'un appareil de communication sur lequel le système de puce est installé réalise le procédé selon l'une quelconque des revendications 9 à 12.
